# NEUE EUROPÄISCHE PATENTSCHRIFT

(11) **EP 3 312 661 B2**
(45) Veröffentlichungstag und Bekanntmachung des Hinweises auf die Entscheidung über den Einspruch: **25.01.2023**
(45) Hinweis auf die Patenterteilung: 08.01.2020
(21) Anmeldenummer: 16195139.7
(22) Anmeldetag: 21.10.2016
(51) Int. Cl.: G02C 7/02

(54) **BRILLENGLAS UND 3D-DRUCKVERFAHREN ZU DESSEN HERSTELLUNG**
BRILLENGLAS UND VERFAHREN, INSBESONDERE 3D-DRUCKVERFAHREN, ZU DESSEN HERSTELLUNG
BRILLENGLAS UND VERFAHREN, INSBESONDERE 3D-DRUCKVERFAHREN, ZU DESSEN HERSTELLUNG

(43) Veröffentlichungstag der Anmeldung: 25.04.2018
(73) Patentinhaber: Carl Zeiss Vision International GmbH, 73430 Aalen (DE)
(72) Erfinder: Mappes, Timo, 76135 Karlsruhe (DE); Kelch, Gerhard, 73434 Aalen (DE); Glöge, Thomas, 73614 Schorndorf (DE)
(74) Vertreter: Glawe, Delfs, Moll

(56) Entgegenhaltungen:
- EP-A1- 0 028 974
- EP-A1- 0 028 974
- EP-A1- 0 028 975
- EP-A1- 0 028 975
- EP-A1- 1 918 760
- EP-A1- 2 878 989
- WO-A1-2015/004383
- WO-A1-2016/094706
- WO-A1-2016/094706
- WO-A2-2006/029268
- DE-A1-102009 004 377
- FR-A1- 2 687 482
- US-A- 399 853
- US-A- 3 998 531
- US-A- 4 679 918
- US-A- 5 343 260
- US-A- 6 079 827
- US-A1- 2003 003 295
- US-A1- 2003 143 391
- US-A1- 2005 046 957
- US-A1- 2007 076 167
- US-A1- 2015 276 987
- US-A1- 2016 161 761

## Beschreibung

Die vorliegende Erfindung betrifft ein Brillenglas umfassend wenigstens die Komponenten A, B und C. Weiterhin betrifft die vorliegende Erfindung ein Verfahren, insbesondere ein 3D-Druckverfahren, zur Herstellung dieses Brillenglases.

Bei Brillengläsern unterscheidet man zwischen Brillengläsern ohne nominelle dioptrische Wirkung und Korrektions-Brillengläsern, also Brillengläsern mit dioptrischer Wirkung. Dioptrische Wirkung ist nach der DIN EN ISO 13666 der Sammelbegriff für die fokussierende und die prismatische Wirkung eines Brillenglases.

Bei Korrektions-Brillengläsern unterscheidet man weiterhin zwischen Einstärken-Brillengläsern und Mehrstärken-Brillengläsern. Ein Einstärken-Brillenglas ist ein Brillenglas, bei dem nur eine dioptrische Wirkung vorhanden ist. Ein Mehrstärken-Brillenglas ist ein Brillenglas, bei dem zwei oder mehr verschiedene Bereiche mit unterschiedlichen dioptrischen Wirkungen im Brillenglas vorhanden sind.

Welche Form das Brillenglas auf seiner Vorderfläche und/oder Rückfläche erhalten muss, um die gewünschte optische Korrektur zu erhalten, wird maßgeblich von dem Werkstoff, aus welchem das Brillenglas gefertigt wird, bestimmt. Wichtigster Parameter ist hierbei der Brechungsindex des eingesetzten Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich. Der Brechungsindex der für Brillengläser geeigneten mineralischen Gläser kann höher sein als der Brechungsindex der für Brillengläser verwendbaren organischen Materialien. Brillengläser basierend auf mineralischen Gläsern zeichnen sich insbesondere durch ihre hohe Kratzfestigkeit und gute Chemikalienbeständigkeit aus. Im Vergleich hierzu zeichnen sich Brillengläser basierend auf organischen Materialien insbesondere durch ihr geringeres spezifisches Gewicht und ihre hohe Bruchfestigkeit aus.

Brillengläser basierend auf mineralischen Gläsern werden regelmäßig durch maschinelle mechanisch abrasive Bearbeitung eines Brillenglasrohlings erzeugt. Bei einem Brillenglasrohling entspricht weder die Vorderfläche noch die Rückfläche bereits den endgültigen, optisch wirksamen Zielflächen. Die für die Anordnung auf der Objektseite bestimmte optische Fläche eines Brillenglases wird als Vorderfläche bezeichnet, die für die Anordnung auf der Augenseite bestimmte optische Fläche eines Brillenglases wird Rückfläche genannt. Die dazwischen liegende entweder unmittelbar eine Kante bildende oder mittelbar über eine Kantenfläche einendseitig an die Vorderfläche und andernendseitig an die Rückfläche angrenzende Fläche bezeichnet man als Zylinderrandfläche. Die vorstehend definierten Begriffe Vorderfläche, Rückfläche und Zylinderrandfläche werden im Folgenden für Brillenglas-Halbfabrikate und Brillenglas-Fertigfabrikate analog verwendet.

Brillengläser basierend auf organischen Materialien werden beispielsweise als Brillenglas-Halbfertigfabrikate mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in JP 2008191186 A beschrieben ist. Die Rückfläche eines so hergestellten Brillenglas-Halbfabrikats kann beispielsweise maschinell mechanisch abrasiv unter Erhalt eines Brillenglas-Fertigfabrikats bearbeitet werden.

Brillenglas-Halbfertigfabrikate, auch als Halbfertigfabrikate, Halbfabrikate oder Halbfertigprodukte bezeichnet, sind Brillenglasrohlinge, deren Vorderfläche oder Rückfläche bereits der endgültigen, optisch wirksamen Zielfläche entspricht. Brillenglas-Fertigfabrikate, auch als Fertigfabrikate, Fertigprodukte oder fertige Brillengläser bezeichnet, sind Brillengläser, deren Vorder- und Rückfläche bereits die endgültige, optisch wirksame Zielfläche ist. Brillenglas-Fertigfabrikate können entweder beispielsweise als Brillenglas-Fertigfabrikate beispielsweise in Urformen mit Vorder- und Rückflächenformschalen, die mittels eines Dichtrings einen Hohlraum bildend voneinander beabstandet sind, abgegossen oder mittels eines Rx-Prozesses gefertigt werden. Brillenglas-Fertigfabrikate werden in der Regel noch formgerandet, d.h. durch Randbearbeitung in die endgültige, an die Brillenfassung angepasste Größe und Form gebracht.

EP 0 182 503 A2 offenbart ein ophthalmisches Kompositbrillenglas, welches objektseitig eine dünne Glasschicht mit einer Dicke von 0,5 mm bis 2,0 mm und augenseitig eine Kunststoffschicht umfasst. Die Glasschicht und die Kunststoffschicht sind durch einen hochelastischen Klebstoff miteinander verbunden. Die Rückfläche der Glasschicht hat hier eine andere Krümmung als die Vorderfläche der Kunststoffschicht. Die dadurch insbesondere am Rand entstehende Lücke wird von dem eingesetzten Klebstoff ausgefüllt.

Aufgabe der vorliegenden Erfindung war es, ein Brillenglas bereitzustellen, dessen dioptrische Wirkung nicht oder nicht ausschließlich aus dem Zusammenspiel der optisch wirksamen Flächen resultiert. Weiterhin war Aufgabe der Erfindung ein einfaches Verfahren zur Herstellung eines derartigen Brillenglases zur Verfügung zu stellen.

Diese Aufgabe wurde gelöst durch Bereitstellung eines Verfahrens zur Herstellung eines Brillenglases umfassend, ausgehend von der objektseitigen Vorderfläche des Brillenglases zur gegenüberliegenden Rückfläche des Brillenglases, wenigstens die Komponenten A, B und C, wobei die Komponente A wenigstens ein Dünnstglas, die Komponente B wenigstens ein polymeres Material, die Komponente C wenigstens ein Dünnstglas umfasst und das Verfahren die folgenden Schritte umfasst:
a) Bereitstellen und optional Fixieren des Dünnstglases der Komponente A oder C,
b) Bereitstellen eines dreidimensionalen Modells der Komponente B,
c) Digitales Zerschneiden des dreidimensionalen Modells aus Schritt b) in einzelne zweidimensionale Lagen,
d) Bereitstellen wenigstens einer 3D-Drucktinte, wobei die Drucktinte wenigstens eine strahlungshärtbare Komponente umfasst,
e) Aufbau der Komponente B aus der Summe der einzelnen zweidimensionalen Lagen aus Schritt c) mittels eines Druckvorgangs auf einem der Dünnstgläser der Komponenten A oder C,
f) Aushärtung der Komponente B mittels UV-Licht, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann, wobei das polymere Material der Komponente B eine ortsabhängige Brechungsindexverteilung aufweist,
g) optional Fräsen und/oder Schleifen und/oder Drehen und/oder Polieren der in Schritt f) erhaltenen Oberfläche der Komponente B, welche nicht an eines der Dünnstgläser der Komponente A oder C angrenzt,
h) h1) für den Fall, dass in Schritt a) das Dünnstglas der Komponente A bereitgestellt wurde: Verbinden der Rückfläche R_{B} der Komponente B des in Schritt f) erhaltenen Brillenglases umfassend die Komponenten A und B, mit der Vorderfläche V_{DC} des Dünnstglases der Komponente C; h2) für den Fall dass in Schritt a) das Dünnstglas der Komponente C bereitgestellt wurde: Verbinden der Vorderfläche V_{B} der Komponente B des in Schritt f) erhaltenen Brillenglases umfassend die Komponenten B und C mit der Rückfläche R_{DA} des Dünnstglases der Komponente A,
i) Formranden des in Schritt h) erhaltenen Brillenglases umfassend die Komponenten A, B und C.

Bevorzugte Weiterbildungen des erfindungsgemäßen Verfahrens sind den abhängigen Ansprüchen 2 bis 13 zu entnehmen.

Das nach dem erfindungsgemäßen Verfahren hergestellte Brillenglas umfasst wenigstens eine Komponente A, wenigstens eine Komponente B sowie wenigstens eine Komponente C. Die Komponente A kann ein Dünnstglas und/oder eine Funktionsschicht F_{A} umfassen. Die Komponente A grenzt im erfindungsgemäß hergestellten Brillenglas objektseitig an die Komponente B an. Die Komponente C kann ein Dünnstglas und/oder eine Funktionsschicht Fc umfassen. Die Komponente C grenzt im erfindungsgemäß hergestellten Brillenglas augenseitig an die Komponente B an. Umfassen sowohl die Komponente A als auch die Komponente C wenigstens ein Dünnstglas, können die beiden Dünnstgläser identisch oder verschieden voneinander gestaltet sein. Beispielsweise kann das Dünnstglas der Komponente A und das Dünnstglas der Komponente C in Bezug auf die Glaskomposition, die Form und/oder die mittlere Dicke identisch oder verschieden voneinander sein. Bei einer bevorzugten Ausführungsform der Erfindung umfasst die Komponente A ein Dunnstglas, die Komponente C entweder ein Dünnstglas und/oder eine Funktionsschicht F_{C}. Bei einer besonders bevorzugten Ausführungsform der Erfindung umfassen sowohl die Komponente A als auch die Komponente C jeweils ein Dünnstglas, welches gleich oder verschieden voneinander gestaltet sein kann.

Das Dünnstglas der Komponente A bzw. der Komponente C kann auf diversen Glaskompositionen basieren. Die Komponente A und die Komponente C kann ein in Bezug auf die Glaskomposition identisches oder voneinander verschiedenes Dünnstglas umfassen. Bei der Glaskomposition für die Dünnstgläser kann es sich beispielsweise um Borosilikatglas, Aluminium-Borosilikatglas oder alkalifreies Borosilikatglas handeln. Bevorzugt basiert das Dünnstglas der Komponente A bzw. der Komponente C jeweils auf einem Borosilikatglas oder einem Aluminium-Borosilikatglas.

Das Dünnstglas der Komponente A bzw. der Komponente C weist jeweils bevorzugt eine mittlere Dicke aus einem Bereich von 10 µm bis 1000 µm, weiter bevorzugt aus einem Bereich von 13 µm bis 760 µm, weiter bevorzugt aus einem Bereich von 16 µm bis 510 µm, besonders bevorzugt aus einem Bereich von 18 µm bis 390 µm und ganz besonders bevorzugt aus einem Bereich von 19 µm bis 230 µm auf. Insbesondere bevorzugt weist das Dünnstglas der Komponente A bzw. das Dünnstglas der Komponente C jeweils eine mittlere Dicke aus einem Bereich von 21 µm bis 121 µm auf. Unter der mittleren Dicke des Dunnstglases der Komponente A bzw. der Komponente C wird jeweils das arithmetische Mittel verstanden, sofern nicht anders angeben.

Unterhalb einer mittleren Dicke von 10 µm ist das Dünnstglas der Komponente A bzw. der Komponente C mechanisch zu instabil, um in dem erfindungsgemäßen Verfahren zur Herstellung eines Brillenglases zum Einsatz kommen zu können. Oberhalb einer mittleren Dicke von 1000 µm kann das Dünnstglas der Komponente A bzw. der Komponente C zu Brillengläsern führen, welche eine zu große Randdicke oder eine zu große Mittendicke des Brillenglases aufweisen würden.
Die mittlere Dicke des Dünnstglases der Komponenten A bzw. C wird jeweils vorzugsweise mit dem Messgerät Filmetrics F10-HC (Firma Filmetrics Inc.) vermessen. Die mittlere Dicke des Dünnstglases der Komponenten A bzw. C wird jeweils vorzugsweise anhand des Dünnstglases in der Form, wie es tatsächlich zum Einsatz kommt, bestimmt. Die mittlere Dicke des Dünnstglases der Komponenten A bzw. C wird somit jeweils entweder anhand eines planen Dünnstglases oder anhand eines umgeformten Dünnstglases vor dem Zusammenfügen mit der Komponente B bestimmt. Alternativ kann die mittlere Dicke des Dünnstglases der Komponenten A bzw. C jeweils mittels einer rasterelektronenmikroskopischen Aufnahme anhand eines Querschliffs bestimmt werden. Die Bestimmung der jeweiligen mittleren Dicke mittels einer rasterelektronenmikroskopischen Aufnahme kann entweder anhand des Dünnstglases der Komponente A, anhand des Dünnstglases der Komponente C oder anhand des erfindungsgemäß hergestellten Brillenglases umfassend die Komponenten A, B und C erfolgen. Hierzu wird die Dicke des Dünnstglases der Komponente A bzw. der Komponente C jeweils an wenigstens 100 Stellen bestimmt und statistisch gemittelt. Bevorzugt erfolgt die Bestimmung der mittleren Dicke des Dünnstglases der Komponente A bzw. der Komponente C mittels einer rasterelektronischen Aufnahme anhand eines Querschliffs des erfindungsgemäß hergestellten Brillenglases. Sofern weitere Komponenten im erfindungsgemäß hergestellten Brillenglas zugegen sind, erfolgt die Bestimmung von deren jeweiliger mittlerer Dicke ebenfalls wie vorstehend beschrieben.

Bei einer Ausführungsform beträgt die relative Standardabweichung der Dickenverteilung des Dünnstglases der Komponente A bzw. C jeweils 0,1 % bis 100%, bevorzugt 0,2% bis 81%, besonders bevorzugt 0,3% bis 66% und ganz besonders bevorzugt 0,4% bis 24%. Die relative Standardabweichung in [%] ist dabei der Quotient aus berechneter Standardabweichung und mittlerer Dicke.

Das Dünnstglas der Komponente A und der Komponente C kann jeweils die gleiche mittlere Dicke aufweisen. Die mittleren Dicken der Dünnstgläser der Komponenten A und C können auch voneinander verschieden sein. Bevorzugt sind die mittleren Dicken der Dünnstgläser der Komponenten A und C jeweils gleich.

Das Dünnstglas der Komponente A bzw. der Komponente C weist jeweils bevorzugt eine Oberflächenrauigkeit Ra von < 1 nm auf. Weiter bevorzugt liegt die Oberflächenrauigkeit Ra des Dünnstglases der Komponente A bzw. der Komponente C jeweils in einem Bereich von 0,1 nm bis 0,8 nm, besonders bevorzugt in einem Bereich von 0,3 nm bis 0,7 nm und ganz besonders bevorzugt in einem Bereich von 0,4 nm bis 0,6 nm. Vorstehend genannte Werte für die Oberflächenrauigkeit Ra beziehen sich jeweils auf die Vorderfläche und die Rückfläche des Dünnstglases der Komponente A bzw. C eines nicht umgeformten, planen Dünnstglases. Nach einer Umformung gelten vorstehend genannte Werte jeweils nur für diejenige Fläche des Dünnstglases, welche nicht mit dem Formkörper in Kontakt gebracht wurde. In Abhängigkeit vom zur Umformung eingesetzten Formkörper können vorstehend genannte Werte auch für die Fläche des Dünnstglases gelten, welche mit dem zur Umformung eingesetzten Formkörper in Kontakt war. Die Oberflächenrauigkeit Ra der Dünnstglases der Komponente A bzw. der Komponente C wird vorzugsweise mittels Weißlichtinterferometrie, vorzugsweise mit dem Gerät NewView 7100 (Firma Zygo Corporation), bestimmt.

Weist das Dünnstglas der Komponente A bzw. der Komponente C weitere oberflächliche Unebenheiten auf, so kann die flächenmäßige Analyse der jeweiligen Oberfläche weiterhin durch phasenmessende Deflektometrie, vorzugsweise mit dem Gerät SpecGage (Firma 3D-Shape GmbH), bestimmt werden.

Die Transformationstemperatur T_{G} des Dünnstglases der Komponente A bzw. des Dünnstglases der Komponente C liegt jeweils bevorzugt in einem Bereich von 400°C bis 800°C, weiter bevorzugt in einem Bereich von 430°C bis 770°C, besonders bevorzugt in einem Bereich von 490°C bis 740°C und ganz besonders bevorzugt in einem Bereich von 530°C bis 730°C. Die Transformationstemperatur T_{G} des Dünnstglases der Komponente A bzw. C kann jeweils mittels dynamisch-mechanischer Analyse, bevorzugt mit dem Messgerät DMA 8000 Dynamic Mechanical Analyzer (Firma Perkin Elmer Inc.), oder mittels dynamischer Differenzkalorimetrie, bevorzugt mit dem Messgerät DSC204CEL mit Controller TASC414/3A oder CC2001 (jeweils Firma Erich NETZSCH GmbH & Co. Holding KG), bestimmt. Bevorzugt wird die Transformationstemperatur T_{G} des Dünnstglases der Komponente A bzw. C jeweils mittels dynamischer Differenzkalorimetrie bestimmt.

Der Ausdehnungskoeffizient des Dünnstglases der Komponente A bzw. der Komponente C liegt jeweils bevorzugt in einem Bereich von 1,8·10⁻⁶K⁻¹ bis 9,1·10⁻⁶K⁻¹, weiter bevorzugt in einem Bereich von 2,1·10⁻⁶K⁻¹ bis 8,8·10⁻⁶K⁻¹, besonders bevorzugt in einem Bereich von 2,6·10⁻⁶K⁻¹ bis 8,2·10⁻⁶K⁻¹ und ganz besonders bevorzugt in einem Bereich von 3,0·10⁻⁶K⁻¹ bis 7,4·10⁻⁶K⁻¹, jeweils bezogen auf den Temperaturbereich von 20°C bis 300°C. Der Ausdehnungskoeffizient des Dünnstglases der Komponente A bzw. der Komponente C wird bevorzugt jeweils mittels Dilatometrie, bevorzugt mit dem Messgerät DIL 402 E/7 (Firma Erich NETZSCH GmbH & Co. Holding KG), erfasst.

Das Dünnstglas der Komponente A bzw. der Komponente C umfasst bevorzugt jeweils keine Farbmittel. Weiterhin bevorzugt liegt die Transmission des Dünnstglases der Komponente A bzw. der Komponente C im Wellenlängenbereich von 400 nm bis 800 nm jeweils bei ≥ 90%, besonders bevorzugt bei ≥ 92%. Die Transmission des Dünnstglases der Komponente A bzw. der Komponente C wird bevorzugt mittels eines UV/VIS Spektralphotometers, bevorzugt mit dem Messgerät LAMBDA 950 UV/Vis/NIR Spectrophotometer (Firma Perkin Elmer Inc.), bestimmt.

Das Dünnstglas der Komponente A bzw. der Komponente C weist jeweils bevorzugt einen Brechungsindex aus einem Bereich von n = 1,490 bis n = 1,950, weiter bevorzugt aus einem Bereich von n = 1,501 bis n = 1,799, besonders bevorzugt aus einem Bereich von n = 1,510 bis n = 1,755 und ganz besonders bevorzugt aus einem Bereich von n = 1,521 bis n= 1,747 auf, wobei der Brechungsindex für die Wellenlänge der Natrium-D-Linie angeben ist. Der Brechungsindex des jeweiligen Dünnstglases der Komponente A bzw. der Komponente C ist bevorzugt an die jeweils direkt angrenzende Funktionsschicht F_{A} bzw. F_{C} und/oder die jeweils direkt angrenzende Komponente, vorzugsweise Komponente B, angepasst. Der Brechungsindex des Dünnstglases der Komponente A und der Komponente C, der Komponente B sowie weiterer Komponenten des erfindungsgemäß hergestellten Brillenglases wird vorzugsweise refraktometrisch an den jeweiligen Bestandteilen des erfindungsgemäß hergestellten Brillenglases separat bestimmt. Als Messgerät kann beispielsweise das Gerät Anton Paar Abbemat MW (Firma Anton Paar GmbH) eingesetzt werden.

Das Dünnstglas der Komponente A bzw. der Komponente C weist jeweils bevorzugt eine Abbezahl aus einem Bereich von 20 bis 85, weiter bevorzugt aus einem Bereich von 23 bis 74, besonders bevorzugt aus einem Bereich von 29 bis 66 und ganz besonders bevorzugt aus einem Bereich von 33 bis 61 auf.

Bei einer Ausführungsform der Erfindung weist das Dünnstglas der Komponente A bzw. der Komponente C sowie das organische Material der Komponente B der Komponente B jeweils bei einem gegebenen Brechungsindex n eine möglichst hohe Abbezahl auf.

Bei einer Ausführungsform der Erfindung weist das Dünnstglas der Komponente A bzw. der Komponente C jeweils eine Transformationstemperatur T_{G} aus einem Bereich von 421°C bis 781°C, bevorzugt aus einem Bereich von 501°C bis 766°C, sowie für den Temperaturbereich von 20°C bis 300°C jeweils einen Ausdehnungskoeffizienten aus einem Bereich von 2,9·10⁻⁶K⁻¹ bis 8,3·10⁻⁶K⁻¹, bevorzugt aus einem Bereich von 3,1·10⁻⁶K⁻¹ bis 7,3·10⁻⁶K⁻¹, auf. Bei dieser Ausführungsform können die Transformationstemperatur T_{G} und/oder der Ausdehnungskoeffizient des Dünnstglases der Komponente A und des Dünnstglases der Komponente C jeweils gleich oder verschieden sein.

Bei einer weiteren Ausführungsform der Erfindung weist das Dünnstglas der Komponente A bzw. der Komponente C jeweils eine mittlere Dicke aus einem Bereich von 17 µm bis 190 µm, bevorzugt aus einem Bereich von 24 µm bis 166 µm, sowie eine Transformationstemperatur T_{G} aus einem Bereich von 510°C bis 730°C, bevorzugt aus einem Bereich von 555°C bis 721°C, auf. Bei dieser Ausführungsform können die mittlere Dicke und/oder die Transformationstemperatur T_{G} des Dünnstglases der Komponente A und des Dünnstglases der Komponente C jeweils gleich oder verschieden sein.

Bei einer bevorzugten Ausführungsform weisen die Dünnstgläser der Komponenten A bzw. C sowie weitere optional vorhandene Dünnstgläser des erfindungsgemäß hergestellten Brillenglases keine photochromen Eigenschaften auf.

Dünnstgläser sind beispielsweise kommerziell erhältlich unter den Bezeichnungen D 263^{®} T eco, AF 32^{®} eco (jeweils Fa. Schott AG) oder Corning Willow Glass (Fa. Corning Inc.).

Das Dünnstglas der Komponente A oder der Komponente C kann jeweils mit unterschiedlichen Formgebungen, beispielsweise plan oder in einer bestimmten Form vorliegen. Im Zusammenhang mit der Form des Dünnstglases wird unter "plan" verstanden, dass das Dünnstglas keine makroskopisch sichtbare Biegung oder Krümmung aufweist. Weisen die Dünnstgläser der Komponenten A und C eine nicht plane Oberfläche auf, kann eine gewünschte Oberflächentopographie, beispielsweise sphärisch oder torisch, durch Verformen eines planen Dünnstglases auf einer entsprechenden Negativform erreicht werden. Beispielsweise kann das Dünnstglas der Komponente A bzw. der Komponente C jeweils in Form einer sphärischen Linse mit einem bestimmten Krümmungsradius ausgestaltet sein. Die Form des Dünnstglases der Komponenten A bzw. C kann identisch oder verschieden voneinander sein. Zur Umformung eines planen Dünnstglases kann dieses zunächst, bevorzugt in Form eines Kreises, beispielsweise mittels eines Lasers, ausgeschnitten werden. Im Randbereich kann dieser ausgeschnittene Dünnstglaskreis anschließend abgeflammt werden, um eventuell entstandene Mikrorisse zu versiegeln. Um möglichst wenig Dünnstglasverschnitt zu erzeugen, wird der Ausschnitt des Dünnstglases so ausgewählt, dass nach dem Zusammenfügen der Komponenten A, B und C des erfindungsgemäß hergestellten Brillenglases möglichst wenig Dünnstglasüberschuss entfernt werden muss. Das ausgeschnittene Dünnstglas kann beispielsweise auf eine zur Umformung geeignete Formschale gelegt, gegebenenfalls mittels einer Halterung befestigt, und vorzugsweise zusammen mit der Formschale, gegebenenfalls zusammen mit der Halterung, bis zur Transformationstemperatur T_{G} der Glaskomposition oder bis zu einer Temperatur, welche vorzugsweise maximal 20°C über der Transformationstemperatur T_{G} der Glaskomposition liegt, erwärmt werden. Die Formschale kann beispielsweise konvex oder konkav ausgeformt sein. Beispielsweise wird das ausgeschnittene Dünnstglas mit Hilfe eines zur Formschale passenden Gegenstücks in diese hinein gedrückt oder der Dünnstglasausschnitt wird unter Anlegen von Vakuum und/oder einfach mittels Schwerkraft in die Formschale geformt. Bevorzugt ist eine Umformung des Dünnstglases unter Anlegen von Vakuum in eine Formschale. Das umgeformte Dünnstglas wird vorzugsweise komplett in oder über der Formschale abkühlen gelassen, bevor es von der Formschale getrennt wird. Die Umformung eines vorzugsweise planen Ausschnitts eines Dünnstglases erfolgt vorzugsweise in einer Schutzgasatmosphäre. Die Formschale kann hierbei als Negativform der bei der Umformung zu erzielenden Vorderfläche oder Rückfläche des Dünnstglases ausgestaltet sein. Beispielsweise kann die Formschale sphärisch, asphärisch rotationssymmetrisch, torisch, atorisch, als symmetrische Freiformfläche oder unsymmetrische Freiformfläche ausgeformt sein. Alternativ kann das Dünnstglas in nicht zugeschnittener Form, vorzugsweise planer Form, mit Hilfe eines Thermoformprozesses umgeformt werden. In Anwesenheit weiterer Komponenten des erfindungsgemäß hergestellten Brillenglases umfassend wenigstens ein Dünnstglas gelten vorstehende Ausführungen entsprechend.

Der Krümmungsradius eines Dünnstglases liegt bevorzugt in einem Bereich von 10 mm bis unendlich, bevorzugt in einem Bereich von 20 mm bis 1600 mm, weiter bevorzugt in einem Bereich von 35 mm bis 1535 mm, weiter bevorzugt in einem Bereich von 56 mm bis 600 mm, besonders bevorzugt in einem Bereich von 66 mm bis 481 mm und ganz besonders bevorzugt in einem Bereich von 75 mm bis 376 mm. Ein Krümmungsradius des Dünnstglases von unendlich entspricht hierbei einer planen Oberfläche. Bei nicht sphärischen Oberflächen des Dünnstglases beziehen sich die vorstehend angegebenen Krümmungsradien jeweils auf eine angenäherte sphärische Form.
Die zur Umformung einsetzbare Formschale umfasst vorzugsweise ein Material, welches sich spanend bearbeiten lässt, keine Strukturen im umgeformten Dünnstglas hervorruft und darüber hinaus mit dem Dünnstglas keine untrennbare Verbindung eingeht. Die Formschale kann beispielsweise aus Graphit, einer Metall(legierung) oder einer Keramik, wie beispielsweise in WO 2006/050891 A2 beschrieben, bestehen. Die Formschale kann weiterhin oberflächenmodifiziert sein, so dass eine Anhaftung des Dünnstglases weiter minimiert wird.

Die Vorderfläche des Dünnstglases V_{DA} der Komponente A ist diejenige Fläche des Dünnstglases, welche sich im erfindungsgemäß hergestellten Brillenglas objektseitig befindet. Die Vorderfläche des Dünnstglases V_{DC} der Komponente C ist diejenige Fläche des Dünnstglases, welche sich im erfindungsgemäß hergestellten Brillenglas objektseitig in Richtung der Komponente B bzw. in Richtung einer weiter objektseitig angeordneten Komponente des erfmdungsgemäß hergestellten Brillenglases befindet. Die Rückfläche des Dünnstglases R_{DA} der Komponente A ist diejenige Fläche des Dünnstglases, welche im erfindungsgemäß hergestellten Brillenglas augenseitig in Richtung der Komponente B bzw. in Richtung einer weiter augenseitig angeordneten Komponente des erfindungsgemäß hergestellten Brillenglases angeordnet ist. Die Rückfläche des Dünnstglases R_{DC} der Komponente C ist diejenige Fläche des Dünnstglases, welche sich im erfindungsgemäß hergestellten Brillenglas augenseitig befindet. Sofern mehr als eine der Komponenten A, B und/oder C im erfindungsgemäß hergestellten Brillenglas zugegen ist, ist deren Vorderfläche jeweils als diejenige Fläche definiert, welche objektseitig angeordnet ist. Die Rückfläche ist dann entsprechend diejenige Fläche der jeweiligen Komponente, welche sich im erfindungsgemäß hergestellten Brillenglas augenseitig befindet.

Das Dünnstglas der Komponente A umfasst bevorzugt auf der Vorderfläche des Dünnstglases V_{DA} wenigstens eine Funktionsschicht F_{VA}. Die Funktionsschicht F_{VA} kann beispielsweise wenigstens eine Entspiegelungsschicht, wenigstens eine elektrisch leitfähige oder halbleitende Schicht, wenigstens eine Antibeschlagsschicht und/oder wenigstens eine Clean-Coat-Schicht umfassen. Bevorzugt umfasst die Funktionsschicht F_{VA} wenigstens eine Entspiegelungsschicht, besonders bevorzugt wenigstens eine Entspiegelungsschicht und wenigstens eine Clean-Coat-Schicht, wobei in letzterem Fall die Clean-Coat-Schicht die objektseitig äußerste Schicht des erfindungsgemäß hergestellten Brillenglases ist.

Das Dünnstglas der Komponente C umfasst bevorzugt auf der Rückfläche des Dünnstglases R_{DC} wenigstens eine Funktionsschicht F_{RC}. Die Funktionsschicht F_{RC} kann wie die Funktionsschicht F_{VA} beispielsweise eine Entspiegelungsschicht, wenigstens eine elektrisch leitfähige oder halbleitende Schicht, wenigstens eine Antibeschlagsschicht und/oder wenigstens eine Clean-Coat-Schicht umfassen. Bevorzugt umfasst die Funktionsschicht F_{RC} wenigstens eine Entspiegelungsschicht, besonders bevorzugt, eine Entspiegelungsschicht und eine Clean-Coat-Schicht, wobei in letzterem Fall die Clean-Coat-Schicht die augenseitig äußerste Schicht des erfindungsgemäß hergestellten Brillenglases ist.

Die wenigstens eine Funktionsschicht F_{VA} der Vorderfläche V_{DA} des Dünnstglases der Komponente A und die wenigstens eine Funktionsschicht F_{RC} der Rückfläche R_{DC} des Dünnstglases der Komponente C können identisch oder verschieden voneinander sein. Bevorzugt sind die wenigstens eine Funktionsschicht F_{VA} und die wenigstens eine Funktionsschicht F_{RC} identisch.

Umfasst die Funktionsschicht F_{VA} der Vorderfläche V_{DA} des Dünnstglases der Komponente A und/oder die Funktionsschicht F_{RC} der Rückfläche R_{DC} des Dünnstglases der Komponente C jeweils wenigstens eine Entspiegelungsschicht, so umfasst diese bevorzugt alternierende diskrete Metalloxid-, Metallhydroxid- und/oder Metalloxidhydratschichten aus oder mit Aluminium, Silizium, Zirkonium, Titan, Yttrium, Tantal, Neodym, Lanthan, Niob und/oder Praseodym. Bei einer Ausführungsform der Erfindung umfasst die Entspiegelungsschicht wenigstens eine Metalloxid-, Metallhydroxid- und/oder Metalloxidhydratschicht aus oder mit Silizium, wobei bevorzugt wenigstens eine Siliziumoxid-, Siliziumhydroxid- und/oder Siliziumoxidhydratschicht objektseitig die außenliegende Schicht der auf dem Dünnstglas der Komponente A bzw. augenseitig die außenliegende Schicht der auf dem Dünnstglas der Komponente C vorliegenden Entspiegelungsschicht darstellt.

Umfasst die Funktionsschicht F_{VA} der Vorderfläche V_{DA} des Dünnstglases der Komponente A und/oder die Funktionsschicht F_{RC} der Rückfläche R_{DC} des Dünnstglases der Komponente C jeweils wenigstens eine elektrisch leitfähige oder halbleitende Schicht, kann diese beispielsweise eine Schicht aus oder mit Indium-Zinn-Oxid (((In₂O₃)_{0.9} (SnO₂)_{0.1}; ITO), Fluor-Zinn-Oxid (SnO₂:F; FTO), Aluminium-Zink-Oxid (ZnO:Al; AZO) und/oder Antimon-Zinn-Oxid (SnO₂:Sb; ATO) umfassen. Bevorzugt umfasst die elektrisch leitfähige oder halbleitende Schicht eine Schicht aus oder mit ITO bzw. aus oder mit FTO.

Umfasst die Funktionsschicht F_{VA} der Vorderfläche V_{DA} des Dünnstglases der Komponente A und/oder die Funktionsschicht F_{RC} der Rückfläche R_{DC} des Dünnstglases der Komponente C jeweils wenigstens eine Antibeschlagsschicht, umfasst diese bevorzugt ein Silanderivat gemäß EP 2 664 659 A1, besonders bevorzugt gemäß Anspruch 4 der EP 2 664 659 A1. Alternativ kann die Antibeschlagsschicht auch gemäß dem in DE 10 2015 209 794 beschriebenen Verfahren, insbesondere gemäß des in Anspruch 1 der DE 10 2015 209 794 beschriebenen Verfahrens, hergestellt werden. Die Antibeschlagsschicht kann direkt auf die Vorderfläche V_{DA} des Dünnstglases der Komponente A bzw. die Rückfläche R_{DC} des Dünnstglases der Komponente C oder auf einer auf der Vorderfläche V_{DA} bzw. einer auf der Rückfläche R_{DC} vorhandenen Entspiegelungsschicht aufgebracht werden. Wird die Antibeschlagsschicht auf einer Entspiegelungsschicht aufgebracht, umfasst die augenseitig bzw. objektseitig außenliegende Schicht der Entspiegelungsschicht bevorzugt eine Metalloxid-, Metallhydroxid- und/oder Metalloxidhydratschicht aus oder mit Silizium.

Umfasst die Funktionsschicht F_{VA} der Vorderfläche V_{DA} des Dünnstglases der Komponente A und/oder die Funktionsschicht F_{RC} der Rückfläche R_{DC} des Dünnstglases der Komponente C jeweils wenigstens eine Clean-Coat-Schicht, umfasst diese vorzugsweise ein Material, auf dem Wasser einen Randwinkel von mehr als 90°, bevorzugt von mehr als 100° und besonders bevorzugt mehr als 110° einnimmt. Die Clean-Coat-Schicht umfasst bevorzugt eine fluororganische Schicht mit kovalenter Anbindung an das Substrat gemäß DE 198 48 591 A1, Anspruch 1, oder eine Schicht auf Basis von Perfluorpolyethern.

Bei einer Ausführungsform der Erfindung ist die Vorderfläche des Dünnstglases V_{DA} der Komponente A ausgehend von der Vorderfläche V_{DA} in Richtung des Objekts bzw. die Rückfläche R_{DC} der Komponente C ausgehend von der Rückfläche R_{DC} in Richtung Auge jeweils mit folgenden Funktionsschichten F_{VA} belegt:
a) optional wenigstens elektrisch leitfähige oder halbleitende Schicht,
b) wenigstens eine Entspiegelungsschicht,
c) wenigstens eine Antibeschlagsschicht oder wenigstens eine Clean-Coat-Schicht.

Bei dieser Ausführungsform kann die optional vorhandene wenigstens eine elektrisch leitfähige oder halbleitende Schicht auch als Bestandteil der wenigstens einen Entspiegelungsschicht vorliegen.

Die Komponente A des erfindungsgemäß hergestellten Brillenglases kann zusätzlich oder alternativ zu einem Dünnstglas wenigstens eine Funktionsschicht F_{A} umfassen. Die Komponente C des erfindungsgemäß hergestellten Brillenglases kann zusätzlich oder alternativ zu einem Dünnstglas wenigstens eine Funktionsschicht F_{C} umfassen. In Abwesenheit eines Dünnstglases ist die Funktionsschicht F_{A} bzw. F_{C} bevorzugt aus der Gruppe bestehend aus wenigstens einer Hartlackschicht, vorzugsweise einer Zusammensetzung für die Herstellung einer Beschichtung mit hoher Haftfestigkeit und hoher Kratzbeständigkeit, wie beispielsweise in EP 2 578 649 A1, insbesondere in EP 2 578 649 A1, Anspruch 1, beschrieben, wenigstens einer Entspieglungsschicht, wenigstens einer Antibeschlagsschicht, wenigstens einer Clean-Coat-Schicht und wenigstens einer elektrisch leitfähige oder halbleitende Schicht, ausgewählt.

Die Beschichtung der Vorderfläche V_{DA} des Dünnstglases der Komponente A mit wenigstens einer Funktionsschicht F_{VA} und/oder der Rückfläche R_{DC} des Dünnstglases der Komponente C mit wenigstens einer Funktionsschicht F_{RC} kann jeweils mittels eines PVD-Verfahrens und/oder eines Schleuderbeschichtungsverfahrens erfolgen. Die anschließende Aushärtung der im Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.

Die Beschichtung der Vorderfläche V_{DA} des Dünnstglases der Komponente A mit wenigstens einer Funktionsschicht F_{VA} und/oder der Rückfläche R_{DC} des Dünnstglases der Komponente C mit wenigstens einer Funktionsschicht F_{RC} kann jeweils anhand des Dünnstglases der Komponente A oder der Komponente C oder anhand des erfindungsgemäß hergestellten Brillenglases umfassend wenigstens die Komponenten A, B und C erfolgen. Bevorzugt wird die Vorderfläche V_{DA} des Dünnstglases der Komponente A und die Rückfläche R_{DC} des Dünnstglases der Komponente C anhand des erfindungsgemäß hergestellten Brillenglases umfassend die Komponenten A, B und C beschichtet.

Die Herstellung der Komponente B des Brillenglases erfolgt mittels eines Druckverfahrens, vorzugsweise 3D-Druckverfahrens, indem entweder die Rückfläche R_{DA} des Dünnstglases der Komponente A bzw. die Vorderfläche V_{DC} des Dünnstglases der Komponente C mit einer vorzugsweise strahlungshärtbaren 3D-Drucktinte bedruckt wird. Bevorzugt erfolgt der Aufbau der Komponente B des Brillenglases durch Bedrucken der Rückfläche R_{DA} des Dünnstglases der Komponente A.

Die Oberflächentopographie derjenigen Fläche der Komponente B, welche nicht durch das Dünnstglas vorbestimmt ist, sondern die dieser Fläche gegenüber liegt, kann mittels eines Druckverfahrens, insbesondere 3D-Druckverfahrens, gezielt aufgebaut werden. Beim 3D-Druckverfahren handelt es sich um ein additives Herstellungsverfahren, bei welchem die gewünschte Oberflächentopographie einer der Flächen der Komponente B ausschließlich durch Materialauftrag hergestellt wird. Die dreidimensionale Form der zu druckenden Komponente B des erfindungsgemäß herzustellenden Brillenglases, welche auch individuell angepasste Aspekte, wie beispielsweise den Durchmesser, den Krümmungsradius, oder individuelle Rezeptwerte, wie beispielsweise eine Progressionsfläche mit vorgegebenem Progressionswert und Verlauf des Progressionskanals berücksichtigen kann, wird zunächst digital in zweidimensionale, horizontale Lagen geschnitten. Selbstverständlich ist hierbei auch der Einfluss des Dünnstglases der Komponente A sowie des Dünnstglases der Komponente C zu berücksichtigen. Weiterhin ist zu berücksichtigen, dass gegebenenfalls vorhandene unerwünschte Fehlstellen der zu bedruckenden Oberfläche des Dünnstglases vorzugsweise zunächst mit wenigstens einer gedruckten Lage ausgeglichen werden. Die Information über die einzelnen zweidimensionalen, übereinander zu druckenden Lagen, wird dem Drucker, insbesondere 3D-Drucker, zur Verfügung gestellt und die Komponente B des erfindungsgemäß herzustellenden Brillenglases hiermit aus der Summe der einzelnen zweidimensionalen Lagen aufgebaut. Eine zu druckende Lage umfasst die nebeneinander Anordnung von Volumenelementen - d.h. die nebeneinander Anordung von Drucktinte, vorzugsweise 3D-Drucktinte, nach Ausgabe aus einem Druckkopf, vorzugsweise aus einem für den 3D-Druck geeigneten Druckkopf - in einer Fläche, wobei die Abmessungen der Volumenelemente unter anderem abhängig von dem Durchmesser der Druckkopfdüsen sind. Das kleinste mögliche Volumenelement entspricht dem Volumen eines Tropfens Drucktinte, vorzugsweise 3D-Drucktinte. Es können mehrere Lagen von nebeneinander angeordneten Volumenelementen übereinander angeordnet, d.h. übereinander gedruckt, werden. Die flächenmäßige Ausdehnung und die Anzahl der übereinander zu druckenden Lagen hängt von den gewünschten Abmessungen der zu druckenden Komponente B des erfindungsgemäß herzustellenden Brillenglases ab. Die Aushärtung der einzelnen Lagen kann lagenweise, vorzugsweise mittels UV-Licht, bis zur vollständigen Abreaktion der strahlungshärtbaren Komponente erfolgen. Alternativ kann nach dem Drucken jeder Lage eine nicht komplette Aushärtung, und nach dem Drucken aller Lagen eine endgültige Aushärtung, jeweils vorzugsweise mittels UV-Licht, erfolgen.

Der Drucker, insbesondere 3D-Drucker, umfasst wenigstens einen Druckkopf, welcher nach dem, aus dem Tintenstrahldruck bekannten Drop-on-demand Verfahren Volumenelemente über ein piezoelektrisches Element erzeugt und ein Volumenelement immer nur genau an der Stelle platziert, wo dieses auch benötigt wird. Der wenigstens eine Druckkopf kann sich über das Dünnstglas der Komponente A oder der Komponente C bewegen und/oder das Dünnstglas der Komponente A oder der Komponente C kann sich unter dem wenigstens einen Druckkopf bewegen. Vorzugsweise wird als 3D-Druckverfahren das Multi-Jet-Modeling bzw. Polyjet Verfahren eingesetzt. Als Druckkopf kann beispielsweise der Druckkopf Xaar 1001 (Fa. Xaar), einer der Druckköpfe Spectra S-Class, Spectra SE3, Spectra SX3, Spectra Q-class (Fa. Spectra), der Druckkopf KM512 (Fa. Konica Minolta) und/oder der Druckkopf 256Jet S4 (Fa. Trident) zum Einsatz kommen. Die Auflösung des Druckkopfs beträgt bevorzugt mindestens 300 x 300 dpi, weiter bevorzugt mindestens 600 x 600 dpi und besonders bevorzugt mindestens 1200 x 1200 dpi. Bevorzugt ist an wenigstens einer Seite des eingesetzten Druckkopfs wenigstens eine UV-Lichtquelle, besonders bevorzugt ist an wenigstens zwei Seiten des eingesetzten Druckkopfs wenigstens eine UV-Lichtquelle angebracht. Alternativ können mehrere Druckköpfe parallel in einem 3D-Drucker verbaut und selektiv angesteuert werden. Die UV-Lichtquelle kann dann aus mehreren ebenfalls parallel geschalteten UV-Lichtquellen oder aus wenigen, großen UV-Lichtquellen bestehen.

Die mittels eines Druckverfahrens, insbesondere 3D-Druckverfahrens, hergestellte Komponente B des erfindungsgemäß hergestellten Brillenglases kann wenigstens einen weiteren mechanischen Bearbeitungsschritt, wie beispielsweise Polieren, erfordern. Vorzugsweise benötigt die mittels eines Druckverfahrens, insbesondere 3D-Druckverfahrens, hergestellte Komponente B des erfindungsgemäß hergestellten Brillenglases keinen weiteren mechanischen Bearbeitungsschritt wie beispielsweise Fräsen und/oder Schleifen und/oder Drehen und/oder Polieren.

Bei einer Ausführungsform der Erfindung kann das erfindungsgemäß herzustellende Brillenglas umfassend die Komponenten A, B und C ohne optische Korrektionswirkung ausgestaltet sein. Komponente B umfasst hierbei eine Drucktinte, vorzugsweise eine strahlungshärtbare 3D-Drucktinte, welche nach Aushärtung in einem Komponente B-Material mit einheitlichem Brechungsindex, d.h. ohne eine Brechungsindexverteilung innerhalb der Komponente B resultiert. Umfassen die beiden Komponenten A und C jeweils ein Dünnstglas kann die Komponente B mit Hilfe eines Druckverfahrens, vorzugsweise 3D-Druckverfahrens, entweder auf der Rückfläche R_{DA} des Dünnstglases der Komponente A oder auf der Vorderfläche V_{DC} der Komponente C aufgebaut werden. Bevorzugt wird die Komponente B mittels eines Druckverfahrens, vorzugsweise 3D-Druckverfahrens, auf der Rückfläche R_{DA} der Komponente A aufgebaut. Umfasst nur eine der Komponenten A oder C ein Dünnstglas, kann Komponente B ausgehend von dem jeweiligen Dünnstglas mittels eines Druckverfahrens, vorzugsweise 3D-Druckverfahrens, aufgebaut werden. Die jeweils andere Komponente C oder A umfassend dann vorzugsweise eine Funktionsschicht Fc bzw. F_{A} kann entweder ebenfalls mittels eines Druckverfahrens, beispielsweise eines 3D-Druckverfahrens, oder mittels eines Schleuderbeschichtungsverfahrens auf die Vorderfläche V_{B} bzw. die Rückfläche R_{B} der Komponente B aufgebracht werden. Alternativ kann die Komponente B auch mittels einer Stützstruktur, welche der Negativform der Vorderfläche V_{B} oder der Rückfläche R_{B} der Komponente B entspricht, mittels eines Druckverfahrens, vorzugsweise 3D-Druckverfahrens, aufgebaut, mit einem der Dünnstgläser der Komponente A und/oder der Komponente C verbunden und, an derjenigen Oberfläche, welche kein Dünnstglas umfasst, mit einer der Funktionsschichten F_{C} bzw. F_{A} beschichtet werden. Umfasst keine der Komponenten A und C ein Dünnstglas wird Komponente B vorzugsweise mittels einer Stützstruktur, welche der Negativform der Vorderfläche V_{B} oder der Rückfläche R_{B} der Komponente B entspricht, mittels eines Druckverfahrens, vorzugsweise 3D-Druckverfahrens, aufgebaut und anschließend auf der Vorderfläche V_{B} mit der Funktionsschicht F_{A} und auf der Rückfläche R_{B} mit der Funktionsschicht F_{C}, jeweils mittels eines Druckverfahrens, beispielsweise 3D-Druckverfahrens, oder mittels eines Schleuderbeschichtungsverfahrens beschichtet.

Bei einer weiteren Ausführungsform kann das erfindungsgemäß herzustellende Brillenglas umfassend die Komponenten A, B und C mit optischer Korrektionswirkung ausgestaltet sein. Unter optischer Korrektionswirkung wird die sphärische Korrektion, die astigmatische Korrektion und die Korrektion der Achslage sowie optional die Korrektion durch ein Prisma mit Basislage verstanden. Diese optische Korrektionswirkung ist herkömmlicherweise für die Ferne in Einstärkenbrillengläsern verwirklicht. Bei Mehrstärkenbrillengläsern, beispielsweise bifokalen Brillengläsern oder Gleitsichtbrillengläsern, kann die optische Korrektionswirkung für die Ferne und/oder für die Nähe jeweils eine sphärische Korrektion, eine astigmatische Korrektion, eine Korrektion der Achslage sowie optional eine Korrektion durch ein Prisma mit Basislage im Nahteil beinhalten.

Die optische Korrektionswirkung und/oder eine Bildfehlerkorrektion für das blickende Auge können bevorzugt erhalten werden durch
- eine geeignete Oberflächentopographie der Vorderfläche V_{DA} des Dünnstglases der Komponente A und der Rückfläche R_{DC} des Dünnstglases der Komponente C im erfindungsgemäß herzustellenden Brillenglas, wobei die Komponente B einen einheitlichen Brechungsindex, d.h. keine Brechungsindexverteilung, aufweist;
- eine geeignete Oberflächentopographie der Vorderfläche V_{B} und der Rückfläche R_{B} der Komponente B, wobei die Komponente A und die Komponente C kein Dünnstglas umfassen und die Komponente B einen einheitlichen Brechungsindex, d.h. keine Brechungsindexverteilung, aufweist;
- eine vorgegebene Oberflächentopographie der Vorderfläche V_{DA} des Dünnstglases der Komponente A, eine vorgegebene Oberfläche der Rückfläche R_{DC} des Dünnstglases der Komponente C, wobei die optische Korrektion und/oder die Bildfehlerkorrektion des blickenden Auges, jeweils für die Ferne und/oder für die Nähe, im erfindungsgemäß herzustellenden Brillenglas ausschließlich auf eine ortsabhängige berechnete Brechungsindexverteilung innerhalb der Komponente B zurückgeht und die jeweiligen Oberflächentopographien der Vorderfläche V_{DA} des Dünnstglases der Komponente A und der Rückfläche R_{DC} des Dünnstglases der Komponente C, deren jeweilige mittlere Dicke und deren jeweiliger Brechungsindex, optional deren Abbezahl bei dieser Berechnung berücksichtigt werden

- eine vorgegebene Oberflächentopographie der Vorderfläche V_{DA} des Dünnstglases der Komponente A, eine vorgegebene Oberflächentopographie der Rückfläche R_{DC} des Dünnstglases der Komponente C, wobei die optische Korrektion und/oder die Bildfehlerkorrektion des blickenden Auges, jeweils für die Ferne und/oder für die Nähe, im erfindungsgemäß herzustellenden Brillenglas teilweise auf einer geeigneten Oberflächentopographie der Vorderfläche V_{DA} des Dünnstglases der Komponente A und/oder der Rückfläche R_{DC} des Dünnstglases der Komponente C sowie teilweise auf einer ortsabhängigen berechneten Brechungsindexverteilung innerhalb der Komponente B beruht;
- eine geeignete Oberflächentopographie der Vorderfläche V_{DA} des Dünnstglases der Komponente A, eine geeignete Oberflächentopographie der Rückfläche R_{DC} des Dünnstglases der Komponente C, wobei die optische Korrektion für die Ferne und/oder die Bildfehlerkorrektion des blickenden Auges für die Ferne im erfindungsgemäß herzustellenden Brillenglas auf einer berechneten ortsabhängigen Brechungsindexverteilung innerhalb der Komponente B beruht und die optische Korrektion für die Nähe und/oder die Bildfehlerkorrektion des blickenden Auges für die Nähe über eine definierte, jeweils bei vorstehender Berechnung zusätzlich zum Brechungsindex des Dünnstglases berücksichtigte, Oberflächentopographie der Vorderfläche V_{DA} des Dünnstglases der Komponente A und/oder Rückfläche des Dünnstglases R_{DC} der Komponente C erreicht wird. Selbstverständlich kann die optische Korrektion für die Ferne und/oder die Bildfehlerkorrektion des blickenden Auges für die Ferne auch über eine definierte Oberflächentopographie der Vorderfläche V_{DA} des Dünnstglases der Komponente A und/oder der Rückfläche R_{DC} des Dünnstglases der Komponente C und die optische Korrektion für die Nähe und/oder die Bildfehlerkorrektion für die Nähe über eine berechnete ortsabhängige Brechungsindexverteilung innerhalb der Komponente B erfolgen. Auch in diesem Fall werden bei der Berechnung die Oberflächentopographien, die Brechungsindices sowie optional die Abbezahl des Dünnstglases der Komponente A und/oder C berücksichtigt.

Für den Fall, dass sowohl die Komponente A als auch die Komponente C ein Dünnstglas umfassen, sind in nachstehenden Tabellen 1 und 2 beispielhaft einige Kombinationen für Oberflächentopographien der Dünnstgläser für Einstärkengläser und Gleitsichtgläser aufgeführt. Im Rahmen dieser Erfindung ist die Oberflächentopographie der Vorderfläche V_{DA} und der Rückfläche R_{DA} des Dünnstglases der Komponente A bzw. der Vorderfläche V_{DC} und der Rückfläche R_{DC} des Dünnstglases der Komponente C jeweils gleich, weswegen in nachstehenden Tabelle 1 und 2 nur jeweils eine Oberflächentopographien aufgeführt ist. In den Tabellen 1 und 2 kann jeweils die senkrechte Spalte oder die waagrechte Spalte die Oberflächentopographie des Dünnstglases der Komponente A oder der Komponente C beschreiben. Den Tabelle ist weiterhin zu entnehmen, ob eine gewünschte optische Korrektionswirkung des erfindungsgemäß herzustellenden Brillenglases mittels einer Komponente B, welche einen einheitlichen Brechungsindex n aufweist oder mittels einer Komponente B, welche eine berechnete ortsabhängige Brechungsindexverteilung innerhalb der Komponente B aufweist, realisiert werden kann.

**Tabelle 1: Mögliche Oberflächentopographien für Dünnstgläser bei Einstärkenbrillengläsern**

| | sphärisch | torisch | asphärisch | atorisch | plan |
|---|---|---|---|---|---|
| sphärisch | n¹⁾, n_{g}²⁾ | n, n_{g} | n, n_{g} | n, n_{g} | n, n_{g} |
| torisch | n, n_{g} | n, n_{g} | n, n_{g} | n, n_{g} | n, n_{g} |
| asphärisch | n, n_{g} | n, n_{g} | n, n_{g} | n, n_{g} | n, n_{g} |
| atorisch | n, n_{g} | n, n_{g} | n, n_{g} | n, n_{g} | n, n_{g} |
| plan | n, n_{g} | n, n_{g} | n, n_{g} | n, n_{g} | n_{g} |
| ¹⁾ n = einheitlicher Brechungsindex der Komponente B | | | | | |
| ²⁾ n_{g} = ortsabhängige Brechungsindexverteilung innerhalb der Komponente B | | | | | |

**Tabelle 2: Mögliche Oberflächentopographien für Dünnstgläser bei Gleitsichtbrillengläsern**

| | sphärisch | torisch | asphärisch | atorisch | progressiv | plan |
|---|---|---|---|---|---|---|
| sphärisch | n_{g}²⁾ | n_{g} | n_{g} | n_{g} | n, n_{g} | n_{g} |
| torisch | n_{g} | n_{g} | n_{g} | n_{g} | n, n_{g} | n_{g} |
| asphärisch | n_{g} | n_{g} | n_{g} | n_{g} | n, n_{g} | n_{g} |
| atorisch | n_{g} | n_{g} | n_{g} | n_{g} | n, n_{g} | n_{g} |
| progressiv | n¹⁾, n_{g} | n, n_{g} | n, n_{g} | n, n_{g} | n, n_{g} | n, n_{g} |
| plan | n_{g} | n_{g} | n_{g} | n_{g} | n, n_{g} | n_{g} |
| ¹⁾ n = einheitlicher Brechungsindex der Komponente B | | | | | | |
| ²⁾ n_{g} = ortsabhängige Brechungsindexverteilung innerhalb der Komponente B | | | | | | |

Bevorzugt wird bei den Berechnungen zur ortsabhängigen Brechungsindexverteilung innerhalb der Komponente B die Oberflächentopographie, der Brechungsindex, die mittlere Dicke sowie optional die Abbezahl des gegebenenfalls vorhandenen Dünnstglases bzw. der gegebenenfalls vorhandenen Dünnstgläser mit berücksichtigt.

Die ortsabhängige Brechungsindexverteilung innerhalb der Komponente B wird bevorzugt mittels optischer Rechenprogramme, wie beispielsweise ZEMAX (Firma Zemax LLC), optimiert. Für die Berechnung muss bevorzugt die Position des erfindungsgemäß herzustellenden Brillenglases vor dem dafür vorgesehenen Auge, die Pupillendistanz, die Vorneigung des Brillenglases, der Fassungsscheibenwinkel des Brillenglases, die Glasgröße bekannt sein. Darüber hinaus wird, insbesondere bei der Berechnung von Mehrstärkengläsern, ein Objektabstandsmodell zugrunde gelegt, welches die Position von Objektpunkten im Blickfeld des Brillenträgers relativ zu dessen Augendrehpunkten beschreibt.

Die Bildfehlerkorrektion für das blickende Auge wird, unabhängig davon, ob es sich um eine Bildfehlerkorrektion für die Ferne oder für die Nähe handelt, bevorzugt analog zu Werner Köppen" Konzeption und Entwicklung von Gleitsichtgläsern", Deutsche Optiker Zeitschrift DOZ, Oktober 1995, Seite 42 - 45, berechnet.

Mittels einer ortsabhängigen Brechungsindexverteilung kann eine optische Korrektion für die Nähe beispielsweise über einen definierten Bereich mit einem definierten Brechungsindex innerhalb der Komponente B oder mittels einer ortsabhängigen Brechungsindexänderung entlang einer definierten Fläche innerhalb der Komponente B erzielt werden.

Für den lagenweisen Aufbau der Komponente B des erfindungsgemäß herzustellenden Brillenglases wird bevorzugt eine im 3D-Druckverfahren einsetzbare Drucktinte eingesetzt. "Lagenweiser Aufbau" umfasst eine aufeinanderfolgende Ablagerung der Drucktinte, vorzugsweise 3D-Drucktinte. Die aufeinanderfolgende Ablagerung kann hierbei sowohl nebeneinander in einer Fläche als auch übereinander in der Höhe erfolgen. Erfolgt beispielsweise eine erste Ablagerung der Drucktinte, vorzugsweise 3D-Drucktinte, in einer Fläche auf dem Dünnstglas der Komponente A oder C, kann eine weitere Lage über die komplette Fläche der ersten Ablagerung oder einen Teil der Fläche der ersten Ablagerung gedruckt werden. Vorzugsweise erfolgt die aufeinanderfolgende Ablagerung der Drucktinte, vorzugsweise 3D-Drucktinte, zunächst nebeneinander in einer Fläche, bevor dann eine weitere aufeinanderfolgende Ablagerung der Drucktinte, vorzugswiese 3D-Drucktinte, in der darüber liegenden Lage erfolgt.

Die Drucktinte, insbesondere 3D-Drucktinte, umfasst bevorzugt wenigstens eine strahlungshärtbare Komponente, optional wenigstens ein Farbmittel, optional wenigstens einen UV-Initiator, optional wenigstens ein Lösungsmittel und optional wenigstens ein Additiv.

Die strahlungshärtbare Komponente der Drucktinte, insbesondere 3D-Drucktinte, vorzugsweise UV-härtbare Komponente, umfasst bevorzugt (Meth)acrylatmonomere, Epoxymonomere, Vinyl- und Allylmonomere, besonders bevorzugt (Meth)acrylatmonomere. Bei den (Meth)acrylatmonomeren kann es sich bevorzugt um monofunktionale, difunktionale, trifunktionale und/oder tetrafunktionale (Meth)acrylatmonomere handeln. Bei den Epoxymonomeren kann es sich bevorzugt um monofunktionale, difunktionale, trifunktionale und/oder tetrafunktionale Epoxymonomere handeln. Bei den Vinyl- und Allylmonomere kann es sich bevorzugt um monofunktionale, difunktionale, trifunktionale und/oder tetrafunktionale Vinyl- und Allylmonomere handeln.

Bei einer Ausführungsform weisen die als strahlungshärtbare Komponente, vorzugsweise UV-härtbare Komponente, einsetzbaren monofunktionalen (Meth)acrylatmonomere, Epoxymonomere, Vinyl- und Allylmonomere bevorzugt eine Viskosität aus einem Bereich von 0,5 mPa·s bis 30,0 mPa·s, besonders bevorzugt aus einem Bereich von 1,0 mPa·s bis 25,0 mPa·s und ganz besonders bevorzugt aus einem Bereich von 1,5 mPa·s bis 20,0 mPa·s auf.

Bei einer Ausführungsform weisen die als strahlungshärtbare Komponente, vorzugsweise UV-härtbare Komponente, einsetzbaren difunktionalen (Meth)acrylatmonomere, Epoxymonomere, Vinyl- und Allylmonomere bevorzugt eine Viskosität aus einem Bereich von 1,5 mPa·s bis 17,0 mPa·s, besonders bevorzugt aus einem Bereich von 2,5 mPa·s bis 14,0 mPa·s und ganz besonders bevorzugt aus einem Bereich von 3,0 mPa·s bis 11,0 mPa·s auf.

Bei einer Ausführungsform weisen die als strahlungshärtbare Komponente, vorzugsweise UV-härtbare Komponente, einsetzbaren trifuntionktionellen (Meth)acrylatmonomere, Epoxymonomere, Vinyl- und Allylmonomere bevorzugt eine Viskosität aus einem Bereich von 20,0 mPa·s bis 110,0 mPa·s, besonders bevorzugt aus einem Bereich von 22,0 mPa·s bis 90,0 mPa·s und ganz besonders bevorzugt aus einem Bereich von 24,0 mPa·s bis 83,0 mPa·s auf.

Bei einer Ausführungsform weisen die als strahlungshärtbare Komponente, vorzugsweise UV-härtbare Komponente, einsetzbaren tetrafunktionalen (Meth)acrylatmonomere, Epoxymonomere, Vinyl- und Allylmonomere bevorzugt eine Viskosität aus einem Bereich von 60,0 mPa·s bis 600,0 mPa·s, besonders bevorzugt aus einem Bereich von 70,0 mPa·s bis 460,0 mPa·s und ganz besonders bevorzugt aus einem Bereich von 80,0 mPa·s bis 270,0 mPa·s auf.

Die Viskosität der (Meth)acrylatmonomere, Epoxymonomere, Vinyl- und Allylmonomere wird jeweils vorzugsweise mit einem Rheometer C-VOR 150 der Fa. Malvern mit der Vorgabe einer Winkelgeschwindigkeit von 5,2 rad/sec bei 25°C gemessen.

Die jeweiligen (Meth)acrylatmonomere, Epoxymonomere, Vinyl- und Allylmonomere können jeweils beispielsweise durch Zugabe wenigstens eines Lösungsmittels auf die gewünschte Viskosität eingestellt werden.

Die Viskosität der zum Aufbau der Komponente B des erfindungsgemäß herzustellenden Brillenglases einsetzbaren Drucktinte, vorzugsweise 3D-Drucktinte, kann beispielsweise durch Mischung verschiedener (Meth)acrylatmonomere, Epoxymonomere, Vinyl- und/oder Allylmonomere, beispielsweise durch Mischung monofunktionaler (Meth)acrylatmonomere, Epoxymonomere, Vinyl- und/oder Allylmonomere und difunktionaler (Meth)acrylatmonomere, Epoxymonomere, Vinyl- und/oder Allylmonomere und/oder trifunktionaler (Meth)acrylatmonomere, Epoxymonomere, Vinyl- und/oder Allylmonomere, eingestellt werden. Alternativ oder zusätzlich zur Mischung verschiedener (Meth)acrylatmonomere, Epoxymonomere, Vinyl- und/oder Allylmonomere kann die Viskosität durch Zugabe wenigstens eines Lösungsmittels eingestellt werden.
Als monofunktionale (Meth)acrylatmonomere können beispielsweise Acrylsäure (CAS Nr. 79-10-7), Methacrylsäure (CAS Nr. 79-41-4), Methylacrylat (CAS Nr. 96-33-3), Methylmethacrylat (CAS Nr. 80-62-6), Ethylacrylat (CAS Nr. 140-88-5), Ethylmethacrylat (CAS Nr. 97-63-2), Ethyl-2-ethylacrylat (CAS Nr. 3070-65-3), (2,2-dimethyl-1,3-dioxolan-4-yl)methylmethacrylat (CAS Nr. 7098-80-8), 2-Phenoxyethylacrylat (CAS Nr. 48145-04-6), Isobornylacrylat (CAS Nr. 5888-33-5), 2-(2-Methoxyethoxy)ethylmethacrylat (CAS Nr. 45103-58-0), 4-Acryloylmorpholin (CAS Nr. 5117-12-4), Dodecylacrylat (CAS Nr. 2156-97-0), Isodecylacrylat (CAS Nr. 1330-61-6), Decylacrylat (CAS Nr. 2156-96-9), n-Octylacrylat (CAS Nr. 2499-59-4), Isooctylacrylat (CAS Nr. 29590-42-9), Octadecylacrylat (CAS Nr. 4813-57-4), Tetrahydrofurfurylacrylat (CAS Nr. 2399-48-6), 2-(2-Ethoxyethoxy)ethylacrylat (CAS Nr. 7328-17-8), 4-tert-Butylcyclohexylacrylat (CAS Nr. 84100-23-2), Methoxypoly(ethylenglycol)monoacrylat (CAS Nr. 32171-39-4), Phenoxypolyethylenglycolacrylat (CAS Nr. 56641-05-5), Mono-2-(acryloyloxy)ethylsuccinat (CAS Nr. 50940-49-3), Allylmethacrylat (CAS Nr. 96-05-9) oder Mischungen davon eingesetzt werden.

Bevorzugt werden als monofunktionale (Meth)acrylatmonomere Acrylsäure, Methacrylsäure, Methylacrylat, Methylmethacrylat, Ethylacrylat, Ethylmethacrylat, 2-Phenoxyethylacrylat, Dodecylacrylat oder Mischungen davon, besonders bevorzugt werden Methacrylsäure, Methylmethacrylat, Ethylmethacrylat oder Mischungen davon eingesetzt.

Als difunktionale (Meth)acrylatmonomere können beispielsweise Ethylenglykoldiacrylat (CAS Nr. 2274-11-5), Diethylenglykoldiacrylat (CAS Nr. 2274-11-5), Triethylenglykoldiacrylat (CAS Nr. 1680-21-3), Tetraethylenglykoldiacrylat (CAS Nr. 17831-71-9), Ethylenglykoldimethacrylat (CAS Nr. 97-90-5), Diethylenglykoldimethacrylat (CAS Nr. 2358-84-1), Triethylenglykoldimethacrylat (CAS Nr. 109-16-0), Tetraethylenglycoldimethacrylat (CAS Nr. 109-17-1), Polyethylenglykol 200 dimethacrylat (CAS Nr. 25852-47-2), Dipropylenglykoldiacrylat (CAS Nr. 57472-68-1), Tripropylenglykoldiacrylat (CAS Nr. 42978-66-5), 1,3-Butandioldiacrylat (CAS Nr. 19485-03-1), 1,4-Butandioldiacrylat (CAS Nr. 1070-70-8), 1,6-Hexandioldiacrylat (CAS Nr. 13048-33-4), Neopentylglycoldiacrylat (CAS Nr. 2223-82-7), 1,3-Butandioldimethacrylat (CAS Nr. 1189-08-8), 1,4-Butandioldimethacrylat (CAS Nr. 2082-81-7), 1,6-Hexandioldimethacrylat (CAS Nr. 6606-59-3) oder Mischungen davon eingesetzt werden.

Bevorzugt werden als difunktionale (Meth)acrylatmonomere Polyethylenglykol 200 dimethacrylat, Ethylenglykoldimethacrylat, Diethylenglykoldimethacrylat, 1,4-Butandioldimethacrylat oder Mischungen davon, besonders bevorzugt werden Ethylenglykoldimethacrylat, Diethylenglykoldimethacrylat oder Mischungen davon eingesetzt.

Als trifunktionale (Meth)acrylatmonomere können beispielsweise Trimethylolpropantrimethacrylat (CAS Nr. 3290-92-4), Trimethylolpropantriacrylat (CAS Nr. 15625-89-5), Pentaerythritoltriacrylat (CAS Nr. 3524-68-3), Pentaerythritolpropoxylattriacrylat (CAS Nr. 145611-81-0), Trimethylolpropanpropoxylattriacrylat (CAS Nr. 53879-54-2), Trimethylolpropanethoxylattriacrylat (CAS Nr. 28961-43-5) oder Mischungen davon eingesetzt werden.

Bevorzugt werden als trifunktionale (Meth)acrylatmonomere Trimethylolpropantrimethacrylat, Pentaerythritoltriacrylat oder Mischungen davon, besonders bevorzugt wird Trimethylolpropantrimethacrylat eingesetzt.

Als tetrafunktionale (Meth)acrylatmonomere können beispielsweise Di(trimethylolpropan)tetraacrylat (CAS Nr. 94108-97-1), Pentaerythritoltetraacrylat (CAS Nr. 4986-89-4), Pentaerythritoltetramethacrylat (CAS Nr. 3253-41-6) oder Mischungen davon eingesetzt werden.

Bevorzugt werden als tetrafunktionale (Meth)acrylatmonomere Di(trimethylolpropan)tetraacrylat, Pentaerythritoltetramethacrylat oder Mischungen davon, besonders bevorzugt Di(trimethylolpropan)tetraacrylat eingesetzt.

Als monofunktionale Epoxymonomere können beispielsweise Ethylglycidylether (CAS Nr. 4016-11-9), n-Butylglycidylether (CAS Nr. 2426-08-6), 2-Ethylhexylglycidylether (CAS Nr. 2461-15-6), C8-C10-Glycidylether (CAS Nr. 68609-96-1), C12-C14-Glycidylether (CAS Nr. 68609-97-2), Cresylglycidylether (CAS Nr. 2210-79-9), p-tert-Butylphenylglycidylether (CAS Nr. 3101-60-8), Nonylphenylglycidylether (CAS Nr. 147094-54-0), Benzylglycidylether (CAS Nr. 2930-05-4), Phenylglycidylether (CAS Nr. 122-60-1), Bisphenol A-(2,3-dihydroxypropyl)glycidylether (CAS Nr. 76002-91-0) oder Mischungen davon zum Einsatz kommen.

Bevorzugt kommen als monofunktionale Epoxymonomere Ethylglycidylether, n-Butylglycidylether, 2-Ethylhexylglycidylether oder Mischungen hiervon, besonders bevorzugt Ethylglycidylether, n-Butylglycidylether oder Mischungen hiervon zum Einsatz.

Als difunktionale Epoxymonomere können beispielsweise Diglycidylether (CAS Nr. 2238-07-5), Ethylenglycoldiglycidylether (CAS Nr. 2224-15-9), Diethylenglykoldiglycidylether (CAS Nr. 4206-61-5), Propylenglykoldiglycidylether (CAS Nr. 16096-30-3), Dipropylenglycoldiglycidylether (CAS Nr. 41638-13-5), 1,4-Butandioldiglycidylether (CAS Nr. 2425-79-8), 1,4-Cyclohexandimethanoldiglycidylether (CAS Nr. 14228-73-0), Neopentylglycoldiglycidylether (CAS Nr. 17557-23-2), Polypropylenglycol(400)diglycidylether (CAS Nr. 26142-30-3), 1,6-Hexandioldiglycidylether (CAS Nr. 16096-31-4), Bisphenol A-diglycidylether (CAS Nr. 1675-54-3), Bisphenol-A-propoxylat-diglycidylether (CAS Nr. 106100-55-4), Polyethylenglykoldiglycidylether (CAS Nr. 72207-80-8), Glyceroldiglycidylether (CAS Nr. 27043-36-3), Resorcinoldiglycidylether (CAS Nr. 101-90-6) oder Mischungen davon in der zum Aufbau der Komponente B einsetzbaren Drucktinte, vorzugsweise 3D-Drucktinte, verwendet werden.

Bevorzugt kommen als difunktionale Epoxymonomere Diglycidylether, Ethylenglycoldiglycidylether, Diethylenglykoldiglycidylether, 1,4-Butandioldiglycidylether, Polyethylenglykoldiglycidylether, Polypropylenglycol(400)diglycidylether oder Mischungen hiervon, besonders bevorzugt Ethylenglycoldiglycidylether, Diethylenglykoldiglycidylether, 1,4-Butandioldiglycidylether, Polyethylenglykoldiglycidylether oder Mischungen hiervon zum Einsatz.

Als trifunktionale Epoxymonomere können beispielsweise Trimethylolethantriglycidylether (CAS Nr. 68460-21-9), Trimethylolpropantriglycidylether (CAS Nr. 30499-70-8), Triphenylolmethantriglycidylether (CAS Nr. 66072-38-6), Tris(2,3-epoxypropyl)isocyanurat (CAS Nr. 2451-62-9), Tris(4-hydroxyphenyl)methantriglycidylether (CAS Nr. 66072-38-6), 1,1,1-Tris(4-hydroxyphenyl)ethantriglycidylether (CAS Nr. 87093-13-8), Glyceroltriglycidylether (CAS Nr. 13236-02-7), Glycerolpropoxylattriglycidylether (CAS Nr. 37237-76-6), N,N-Diglycidyl-4-glycidyloxyanilin (CAS Nr. 5026-74-4) oder Mischungen davon eingesetzt werden.

Bevorzugt kommen als trifunktionale Epoxymonomere Trimethylolpropantriglycidylether, Tris(2,3-epoxypropyl)isocyanurat, Glyceroltriglycidylether, Glycerolpropoxylattriglycidylether oder Mischungen hiervon, besonders bevorzugt Tris(2,3-epoxypropyl)isocyanurat, Glyceroltriglycidylether oder Mischungen hiervon zum Einsatz.

Als tetrafunktionale Epoxymonomere können beispielsweise Pentaerythritoltetraglycidylether, (CAS Nr. 3126-63-4), Dipentaerythritoltetraglycidylether, Tetraglycidylbenzylethan, Sorbitoltetraglycidylether, Tetraglycidyldiaminophenylmethan, Tetraglycidylbisaminomethylcyclohexan oder Mischungen davon zum Einsatz kommen.

Bevorzugt werden als tetrafunktionale Epoxymonomere Pentaerythritoltetraglycidylether, (CAS Nr. 3126-63-4), Dipentaerythritoltetraglycidylether, Sorbitoltetraglycidylether oder Mischungen davon, besonders bevorzugt Pentaerythritoltetraglycidylether, (CAS Nr. 3126-63-4), Dipentaerythritoltetraglycidylether oder Mischungen davon eingesetzt.

Umfasst die strahlungshärtbare Komponente der zum Aufbau der Komponente B einsetzbaren Drucktinte, vorzugsweise 3D-Drucktinte, monofunktionale Vinylmonomere so können diese beispielweise Ethylenglycolvinylether (CAS Nr. 764-48-7), Di(ethylenglycol)vinylether (CAS Nr. 929-37-3), 1-Vinylcyclohexanol (CAS Nr. 1940-19-8), Vinylacetat (CAS Nr. 108-05-4), Vinylchlorid (CAS Nr. 75-01-4), Ethylvinylketon (CAS Nr. 1629-58-9), Butylvinylether (CAS Nr. 111-34-2), 1,4-Butandiolvinylether (CAS Nr. 17832-28-9), Vinylacrylat (CAS Nr. 2177-18-6), Vinylmethacrylat (CAS Nr. 4245-37-8), Isobutylvinylether (CAS Nr. 109-53-5), Vinylpivalat (CAS Nr. 3377-92-2), Vinylbenzoat (CAS Nr. 769-78-8), Vinylvalerat (CAS Nr. 5873-43-8), 2-Ethylhexylvinylether (CAS Nr. 103-44-6), Phenylvinylether (CAS Nr. 766-94-9), tert-Butylvinylether (CAS Nr. 926-02-3), Cyclohexylvinylether (CAS Nr. 2182-55-0), Dodecylvinylether (CAS Nr. 765-14-0), Ethylvinylether (CAS Nr. 109-92-2), Propylvinylether (CAS Nr. 764-47-6), 1,4-Cyclohexandimethanolvinylether (CAS Nr. 114651-37-5) oder Mischungen hiervon umfassen.

Bevorzugt werden als monofunktionale Vinylmonomere Ethylenglycolvinylether, Di(ethylenglycol)vinylether, Ethylvinylketon, Vinylacetat, Phenylvinylether, Cyclohexylvinylether oder Mischungen hiervon, besonders bevorzugt Ethylvinylketon, Vinylacetat, Ethylenglycolvinylether oder Mischungen hiervon eingesetzt.

Als difunktionale Vinylmonomere können beispielsweise Di(ethylenglycol)divinylether (CAS Nr. 764-99-8), Tri(ethylenglycol)divinylether (CAS Nr. 765-12-8), Tetra(ethylenglycol)divinylether (CAS Nr. 83416-06-2), Poly(ethylenglycol)divinylether (CAS Nr. 50856-26-3), Tri(ethylenglycol)divinylether (CAS Nr. 765-12-8), Divinylbenzol (CAS Nr. 1321-74-0), 1,4-Butandioldivinylether (CAS Nr. 3891-33-6), 1,6-Hexandioldivinylether (CAS Nr. 19763-13-4), 1,4-Cyclohexandimethanoldivinylether (CAS Nr. 17351-75-6), 1,4-Pentadien-3-ol (CAS Nr. 922-65-6) oder Mischungen hiervon zum Einsatz kommen.
Bevorzugt werden als difunktionale Vinylmonomere Di(ethylenglycol)divinylether, 1,4-Cyclohexandimethanoldivinylether, Poly(ethylenglycol)divinylether, Divinylbenzol oder Mischungen hiervon, besonders bevorzugt 1,4-Cyclohexandimethanoldivinylether, Divinylbenzol, Di(ethylenglycol)divinylether oder Mischungen hiervon als strahlungshärtbare Komponente in der zum Aufbau der Komponente B des erfindungsgemäß herzustellenden Brillenglases verwendbaren Drucktinte, vorzugsweise 3D-Drucktinte, eingesetzt.

Als trifunktionale bzw. tetrafunktionale Vinylmonomere können beispielsweise 1,3,5-Trivinylbenzol, 1,2,4-Trivinylcyclohexan (CAS Nr. 2855-27-8), 1,3,5-Trivinyl-1,3,5-triazinan-2,4,6-trion, 1,3,5-Trivinyl-1,3,5-trimethylcylcotrisiloxan (CAS Nr. 3901-77-7), 2,4,6-Trimethyl-2,4,6-trivinylcyclotrisilazan (CAS Nr. 5505-72-6), 2,4,6-Trivinylcyclotriboroxanpyridin-Komplex (CAS Nr. 442850-89-7), Tetravinylsilan (CAS Nr. 1112-55-6), 2,4,6,8-Tetramethyl-2,4,6,8-tetravinylcyclotetrasiloxan (CAS Nr. 2554-06-5) oder Mischungen davon eingesetzt werden.

Bevorzugt werden als trifunktionale bzw. tetrafunktionale Vinylmonomere 1,3,5-Trivinylbenzol, 1,2,4-Trivinylcyclohexan, Tetravinylsilan oder Mischungen hiervon, besonders bevorzugt 1,3,5-Trivinylbenzol, 1,2,4-Trivinylcyclohexan oder Mischungen hiervon eingesetzt.

Weiterhin kann die zum Aufbau der Komponente B des erfindungsgemäß herzustellenden Brillenglases einsetzbare Drucktinte, vorzugsweise 3D-Drucktinte, monofunktionale Allylmonomere, wie beispielsweise Allylacetat (CAS Nr. 591-87-7), Allylacetoacetat (CAS Nr. 1118-84-9), Allylalkohol (CAS Nr. 107-18-6), Allylbenzylether (CAS Nr. 14593-43-2), Allylbutylether (CAS Nr. 3739-64-8), Allylbutyrat (CAS Nr. 2051-78-7), Allylethylether (CAS Nr. 557-31-3), Ethylenglycolallylether (CAS Nr. 111-45-5), Allylphenylether (CAS Nr. 1746-13-0), Trimethylolpropanallylether (CAS Nr. 682-11-1), 2-Allyloxyethanol (CAS Nr. 111-45-5), 3-Allyloxy-1,2-propandiol (CAS Nr. 123-34-2) oder Mischungen hiervon umfassen.

Bevorzugt werden als monofunktionale Allylmonomere Allylacetat, Allylalkohol, Ethylenglycolallylether, Allyloxyethanol oder Mischungen hiervon, besonders bevorzugt Allylacetat, Allylalkohol, Ethylenglycolallylether oder Mischungen hiervon umfassen.

Als difunktionale Allylmonomere können beispielsweise Allylether (CAS Nr. 557-40-4), 2,2'-Diallylbisphenol A (CAS Nr. 1745-89-7), 2,2'-Diallylbisphenol A diacetatether (CAS Nr. 1071466-61-9), Trimethylolpropandiallylether (CAS Nr. 682-09-7), Diallylcarbonat (CAS Nr. 15022-08-9), Diallylmaleat (CAS Nr. 999-21-3), Diallylsuccinat (CAS Nr. 925-16-6), Diallylphthalat (CAS Nr. 131-17-9), Di(ethylenglycol)bis(allylcarbonat) (CAS Nr. 142-22-3) oder Mischungen davon eingesetzt werden.

Bevorzugt werden als difunktionale Allylmonomere Allylether, 2,2'-Diallylbisphenol A, Diallylcarbonat, Diallylsuccinat, Di(ethylenglycol)bis(allylcarbonat), Diallylmaleat oder Mischungen davon, besonders bevorzugt Allylether, 2,2'-Diallylbisphenol A, Diallylcarbonat, Diethylenglykoldiallylcarbonat oder Mischungen davon eingesetzt.

Als trifunktionale bzw. tetrafunktionale Allylmonomere können beispielsweise 2,4,6-Triallyloxy-1,3,5-triazin (CAS Nr. 101-37-1), 1,3,5-Triallyl-1,3,5-triazin-2,4,6(1H,3H,5H)-trion (CAS Nr. 1025-15-6), 3-(N,N',N'-Triallylhydrazin)propionsäure, Pentaerythritolallylether (CAS Nr. 91648-24-7), 1,1,2,2-Tetraallyloxyethan (CAS Nr. 16646-44-9), Tetraallylpyromellitat (CAS Nr. 13360-98-0) oder Mischungen davon eingesetzt werden.

Bevorzugt werden als trifunktionale bzw. tetrafunktionale Allylmonomere 2,4,6-Triallyloxy-1,3,5-triazin, Pentaerythritolallylether, 1,3,5-Triallyl-1,3,5-triazin-2,4,6(1H,3H,5H)-trion oder Mischungen davon, besonders bevorzugt 2,4,6-Triallyloxy-1,3,5-triazin, Pentaerythritolallylether oder Mischungen davon eingesetzt.

Die Auswahl an zu verwendenden strahlungshärtenden Komponenten erfolgt vorzugsweise so, dass ausreichend vernetzbare, aber dennoch schnell aushärtende Monomermischungen erhalten werden können.

Der Gesamtanteil an wenigstens einer strahlungshärtbaren Komponente in der zum Aufbau der Komponente B des erfindungsgemäß herzustellenden Brillenglases verwendbaren Drucktinte, vorzugsweise 3D-Drucktinte, liegt bevorzugt in einem Bereich von 11,0 Gew.-% bis 99,5 Gew.-%, weiter bevorzugt in einem Bereich von 17 Gew.-% bis 99 Gew.-%, besonders bevorzugt in einem Bereich von 31 Gew.-% bis 98,5 Gew.-% und ganz besonders bevorzugt in einem Bereich von 40 Gew.-% bis 98 Gew.-%, jeweils bezogen auf das Gesamtgewicht der Drucktinte, vorzugsweise 3D-Drucktinte. Vorstehend aufgeführte Bereiche gelten sowohl für die Verwendung von ausschließlich monofunktionalen, ausschließlich difunktionalen, ausschließlich trifunktionalen, ausschließlich tetrafunktionalen strahlungshärtbaren Komponenten als auch für die Verwendung von Mischungen strahlungshärtbarer Komponenten ausgewählt aus der Gruppe bestehend aus monofunktionalen, difunktionalen, trifunktionalen und tetrafunktionalen strahlungshärtbaren Komponenten. Vorstehend aufgeführte Bereiche gelten weiterhin sowohl für die Verwendung von ausschließlich (Meth)acrylatmonomeren, Epoxymonomeren, Vinyl- oder Allylmonomeren als auch für die Verwendung von Mischungen hiervon. Beispielsweise kann wenigstens ein monofunktionales (Meth)acrylatmonomer mit wenigstens einem trifunktionalen Epoxymonomer in Mischung vorliegen.

Der Gesamtanteil an wenigstens einer Art an monofunktionalem (Meth)acrylatmonomer Epoxymonomer, Vinyl- oder Allylmonomer liegt in der zum Aufbau der Komponente B des erfindungsgemäß herzustellenden Brillenglases einsetzbaren Drucktinte, vorzugsweise 3D-Drucktinte, bevorzugt in einem Bereich von 0,0 Gew.-% bis 60,0 Gew.-%, weiter bevorzugt in einem Bereich von 0,3 Gew.-% bis 51,0 Gew.-%, besonders bevorzugt in einem Bereich von 1,2 Gew.-% bis 44,0 Gew.-% und ganz besonders bevorzugt in einem Bereich von 1,8 Gew.-% bis 35,0 Gew.-%, jeweils bezogen auf das Gesamtgewicht der Drucktinte, vorzugsweise 3D-Drucktinte. Vorstehend genannte Bereiche gelten sowohl für die Verwendung einer Art an monofunktionalem (Meth)acrylatmonomer, Epoxymonomer, Vinyl- oder Allylmonomer als auch für die Verwendung einer Mischung voneinander verschiedener monofunktionaler (Meth)acrylatmonomere, Epoxymonomere, Vinyl- oder Allylmonomere. Beispielsweise kann wenigstens eine Art monofunktionales (Meth)acrylatmonomer mit wenigstens einer Art monofunktionalem Allylmonomer oder wenigstens eine Art monofunktionales (Meth)acrylatmonomer mit wenigstens einer hiervon verschiedenen Art an monofunktionalem (Meth)acrylatmonomer jeweils in Mischung vorliegen.

Bei einer bevorzugten Ausführungsform umfasst die zum Aufbau der Komponente B des erfindungsgemäß herzustellenden Brillenglases einsetzbare Drucktinte, vorzugsweise 3D-Drucktinte, kein monofunktionales (Meth)acrylatmonomer, Epoxymonomer, Vinyl- oder Allylmonomer.

Der Gesamtanteil an wenigstens einer Art an difunktionalem (Meth)acrylatmonomer, Epoxymonomer, Vinyl- oder Allylmonomer liegt in der zum Aufbau der Komponente B des erfindungsgemäß herzustellenden Brillenglases einsetzbaren Drucktinte, vorzugsweise 3D-Drucktinte, bevorzugt in einem Bereich von 32,0 Gew.-% bis 99,0 Gew.-%, weiter bevorzugt in einem Bereich von 39,0 Gew.-% bis 97,0 Gew.-%, besonders bevorzugt in einem Bereich von 47,0 Gew.-% bis 95,0 Gew.-% und ganz besonders bevorzugt in einem Bereich von 56,0 Gew.-% bis 93,0 Gew.-%, jeweils bezogen auf das Gesamtgewicht der Drucktinte, vorzugsweise 3D-Drucktinte. Vorstehend genannte Bereiche gelten sowohl für die Verwendung einer Art an difunktionalem (Meth)acrylatmonomer, Epoxymonomer, Vinyl- oder Allylmonomer als auch für die Verwendung einer Mischung voneinander verschiedener difunktionaler (Meth)acrylatmonomere, Epoxymonomere, Vinyl- oder Allylmonomere. Beispielsweise kann wenigstens eine Art an difunktionalem (Meth)acrylatmonomer mit wenigstens einer Art an difunktionalem Epoxymonomer in Mischung vorliegen oder es kann sich um eine Mischung aus zwei voneinander verschiedenen Arten monofunktionaler (Meth)acrylatmonomere handeln.

Der Gesamtanteil an wenigstens einer Art an trifunktionalem (Meth)acrylatmonomer, Epoxymonomer, Vinyl- oder Allylmonomer liegt in der zum Aufbau der Komponente B des erfindungsgemäß herzustellenden Brillenglases einsetzbaren Drucktinte, vorzugsweise 3D-Drucktinte, bevorzugt in einem Bereich von 1,0 Gew.-% bis 51,0 Gew.-%, weiter bevorzugt in einem Bereich von 2,0 Gew.-% bis 43,0 Gew.-%, besonders bevorzugt in einem Bereich von 3,0 Gew.-% bis 36,0 Gew.-% und ganz besonders bevorzugt in einem Bereich von 4,0 Gew.-% bis 31,0 Gew.-%, jeweils bezogen auf das Gesamtgewicht der Drucktinte, vorzugsweise 3D-Drucktinte. Vorstehend genannte Bereiche gelten sowohl für die Verwendung einer Art an trifunktionalem (Meth)acrylatmonomer, Epoxymonomer, Vinyl- oder Allylmonomer als auch für die Verwendung einer Mischung voneinander verschiedener trifunktionaler (Meth)acrylatmonomere, Epoxymonomere, Vinyl- oder Allylmonomere. Beispielsweise kann wenigstens eine Art an trifunktionalem (Meth)acrylatmonomer mit wenigstens einer Art an trifunktionalem Vinylmonomer oder wenigstens eine Art an trifunktionalem (Meth)acrylatmonomer mit wenigstens einer davon verschiedenen Art an trifunktionalem (Meth)acrylatmonomer jeweils in Mischung vorliegen.

Der Gesamtanteil an wenigstens einer Art an tetrafunktionalem (Meth)acrylatmonomer, Epoxymonomer, Vinyl- oder Allylmonomer liegt in der zum Aufbau der Komponente B des erfindungsgemäß herzustellenden Brillenglases einsetzbaren Drucktinte, vorzugsweise 3D-Drucktinte, bevorzugt in einem Bereich von 0 Gew.-% bis 16 Gew.-%, weiter bevorzugt in einem Bereich von 0 bis 13 Gew.-%, besonders bevorzugt in einem Bereich von 0,1 Gew.-% bis 9 Gew.-% und ganz besonders bevorzugt in einem Bereich von 0,4 Gew-% bis 4 Gew.-%, jeweils bezogen auf das Gesamtgewicht der Drucktinte, vorzugsweise 3D-Drucktinte. Vorstehend genannte Bereiche gelten sowohl für die Verwendung einer Art an tetrafunktionalem (Meth)acrylatmonomer, Epoxymonomer, Vinyl- oder Allylmonomer als auch für die Verwendung einer Mischung voneinander verschiedener tetrafunktionaler (Meth)acrylatmonomere, Epoxymonomere, Vinyl- oder Allylmonomere. Beispielsweise kann wenigstens eine Art an tetrafunktionalem (Meth)acrylatmonomer mit wenigstens einer weiteren, hiervon verschiedenen Art an tetrafunktionalem (Meth)acrylatmonomer in Mischung vorliegen oder es kann sich um eine Mischung an wenigstens einer Art an tetrafunktionalem (Meth)acrylatmonomer mit wenigstens einer Art an tetrafunktionalem Allylmonomer handeln.

Bei einer bevorzugten Ausführungsform umfasst die zum Aufbau der Komponente B des erfindungsgemäß herzustellenden Brillenglases einsetzbare Drucktinte, vorzugsweise 3D-Drucktinte, wenigstens eine monofunktionale strahlungshärtbare Komponente und wenigstens eine difunktionale strahlungshärtbare Komponente bevorzugt im Gewichtsverhältnis 1 : 1, besonders bevorzugt im Gewichtsverhältnis 1 : 5 und ganz besonders bevorzugt im Gewichtsverhältnis 1 : 10.

Bei einer weiteren Ausführungsform umfasst die zum Aufbau der Komponente B des erfindungsgemäß herzustellenden Brillenglases einsetzbare Drucktinte, vorzugsweise 3D-Drucktinte, wenigstens eine monofunktionale strahlungshärtbare Komponente und wenigstens eine trifunktionale strahlungshärtbare Komponente bevorzugt im Gewichtsverhältnis 1 : 5, besonders bevorzugt im Gewichtsverhältnis 1 : 3 und ganz besonders bevorzugt im Gewichtsverhältnis 1 : 1.

Bei einer weiteren Ausführungsform umfasst die zum Aufbau der Komponente B des erfindungsgemäß herzustellenden Brillenglases einsetzbare Drucktinte, vorzugsweise 3D-Drucktinte, wenigstens eine difunktionale strahlungshärtbare Komponente und wenigstens eine trifunktionale strahlungshärtbare Komponente im Gewichtsverhältnis 1 : 1, besonders bevorzugt im Gewichtsverhältnis 5 : 1 und ganz besonders bevorzugt im Gewichtsverhältnis 8 : 1.

Bei einer weiteren Ausführungsform umfasst die zum Aufbau der Komponente B des erfindungsgemäß herzustellenden Brillenglases einsetzbare Drucktinte, vorzugsweise 3D-Drucktinte, wenigstens eine difunktionale strahlungshärtbare Komponente und wenigstens eine tetrafunktionale strahlungshärtbare Komponente im Gewichtsverhältnis 5 : 1, besonders bevorzugt im Gewichtsverhältnis 10 : 1 und ganz besonders bevorzugt im Gewichtsverhältnis 20 : 1.

Bei einer weiteren Ausführungsform umfasst die zum Aufbau der Komponente B des erfindungsgemäß herzustellenden Brillenglases einsetzbare Drucktinte, vorzugsweise 3D-Drucktinte, wenigstens eine monofunktionale strahlungshärtbare Komponente und wenigstens eine difunktionale strahlungshärtbare Komponente und wenigstens eine trifunktionale strahlungshärtbare Komponente im Gewichtsverhältnis 1 : 5 : 1, besonders bevorzugt im Gewichtsverhältnis 2 : 13 : 0,5 und ganz besonders bevorzugt im Gewichtsverhältnis 2: 18 : 0,3.

Bei einer besonders bevorzugten Ausführungsform umfasst die zum Aufbau der Komponente B des erfindungsgemäß herzustellenden Brillenglases einsetzbare Drucktinte, vorzugsweise 3D-Drucktinte, als strahlungshärtbare Komponente wenigstens eine Art an difunktionalem (Meth)acrylatmonomer und wenigstens eine Art an trifunktionalem (Meth)acrylatmonomer, wobei die Viskosität der Drucktinte, vorzugsweise 3D-Drucktinte bei ≤ 50 mPa·s, bevorzugt in einem Bereich von 5 mPa·s bis 33 mPa·s, weiter bevorzugt in einem Bereich von 7 mPa·s bis 27 mPa·s, besonders bevorzugt in einem Bereich von 9 mPa·s bis 23 mPa·s und ganz besonders bevorzugt in einem Bereich von 11 mPa·s bis 21 mPa·s liegt.

Bei einer weiteren bevorzugten Ausführungsform umfasst die zum Aufbau der Komponente B des erfindungsgemäß herzustellenden Brillenglases einsetzbare Drucktinte, vorzugsweise 3D-Drucktinte, als strahlungshärtbare Komponente wenigstens eine Art an difunktionalem Epoxymonomer und wenigstens eine Art an trifunktionalem Epoxymonomer, wobei die Viskosität der Drucktinte, vorzugsweise 3D-Drucktinte bei ≤ 53 mPa·s, bevorzugt in einem Bereich von 4 mPa·s bis 31 mPa·s, weiter bevorzugt in einem Bereich von 6 mPa·s bis 28 mPa·s, besonders bevorzugt in einem Bereich von 9 mPa·s bis 22 mPa·s und ganz besonders bevorzugt in einem Bereich von 10 mPa·s bis 20 mPa·s liegt.

Bei einer Ausführungsform umfasst die zum Aufbau der Komponente B des erfindungsgemäß herzustellenden Brillenglases einsetzbare Drucktinte, vorzugsweise 3D-Drucktinte, wenigstens einen UV-Initiator. Die Drucktinte, vorzugsweise 3D-Drucktinte, kann beispielsweise Benzophenon (CAS Nr. 119-61-9), 2-Methylbenzophenon (CAS Nr. 131-58-8), 4-Methylbenzophenon (CAS Nr. 134-84-9), 4,4'-Bis(dimethylamino)benzophenon (CAS Nr. 90-94-8), Benzoin (CAS Nr. 119-53-9), Benzoinmethylether (CAS Nr. 3524-62-7), Benzoinisopropylether (CAS Nr. 6652-28-4), 2,2-Dimethoxy-1,2-diphenylethan-1-on (CAS Nr. 24650-42-8), Phenylbis(2,4,6-trimethylbenzoyl)phosphinoxid (CAS Nr. 162881-26-7), 2,4,6-Trimethylbenzoylphenylphosphinsäureethylester (CAS Nr. 84434-11-7), 2-Methyl-1-[4-(methylthio)phenyl]-2-(4-morpholinyl)-1-propanon (CAS Nr. 71868-10-5), 2-Hydroxy-2-methyl-1-phenyl-1-propanon (CAS Nr. 7473-98-5), 2-(Dimethylamino)-1-(4-(4-morpholinyl)phenyl)-2-(phenylmethyl)-1-butanon (CAS Nr. 119313-12-1), Diphenyl(2,4,6-trimethylbenzoyl)phosphinoxid (CAS Nr. 75980-60-8), Triarylsulfoniumhexafluorophosphat-Salze (CAS Nr. 109037-77-6), Triarylsulfoniumhexafluoroantimonat-Salze (CAS Nr. 109037-75-4) oder Mischungen hiervon als UV-Initiator umfassen. Bevorzugt umfasst die Drucktinte, vorzugsweise 3D-Drucktinte, Benzophenon, 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid, Triarylsulfoniumhexafluorophosphat-Salze oder Mischungen hiervon, besonders bevorzugt 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid oder Mischungen hiervon als UV-Initiator.
Die zum Aufbau der Komponente B des erfindungsgemäß herzustellenden Brillenglases einsetzbare Drucktinte, vorzugsweise 3D-Drucktinte, umfasst den wenigstens einen UV-Initiator in einem Gesamtanteil aus einem Bereich von bevorzugt 0,01 Gew.-% bis 3,7 Gew.-%, besonders bevorzugt aus einem Bereich von 0,1 Gew.-% bis 2,1 Gew.-% und ganz besonders bevorzugt aus einem Bereich von 0,3 Gew.-% bis 1,7 Gew.-%, jeweils bezogen auf das Gesamtgewicht der Drucktinte, vorzugsweise 3D-Drucktinte.

Bei einer Ausführungsform kann der wenigstens eine UV-Initiator zusammen mit einem Co-Initiator eingesetzt werden. Co-Initiatoren werden vorzugsweise immer dann zugesetzt, wenn der UV-Initiator ein zweites Molekül zur Bildung eines im UV-Bereich aktiven Radikals benötigt. Beispielsweise benötigt Benzophenon ein zweites Molekül, wie beispielsweise ein Amin, z.B. Triethylamin, Methyldiethanolamin oder Triethanolamin, um nach Absorption von UV-Licht ein Radikal zu erzeugen.

Das optional wenigstens eine Lösungsmittel der zum Aufbau der Komponente B des erfindungsgemäß herzustellenden Brillenglases einsetzbaren Drucktinte, vorzugsweise 3D-Drucktinte, kann aus der Gruppe bestehend aus Alkoholen, Ketonen, Estern, Ethern, Thioethern, Amiden, Kohlenwasserstoffen, Aminen und Mischungen hiervon, ausgewählt werden. Vorzugsweise wird das optional wenigstens eine Lösungsmittel aus der Gruppe, bestehend aus Alkoholen, Ketonen, Estern und Mischungen hiervon, ausgewählt. Ein Lösungsmittel kann im Sinne dieser Erfindung einerseits eine Art von Lösungsmittel, andererseits ein Lösungsmittelgemisch sein.

Beispiele für als Lösungsmittel einsetzbare Alkohole sind Methanol, Ethanol, Propanol, Isopropanol, Butanol, Pentanol, Hexanol oder Mischungen hiervon.

Beispiele für als Ketone einsetzbare Lösungsmittel sind Aceton, Methylethylketon, Cyclohexanon, Diisobutylketon, Methylpropylketon, Diacetonalkohol oder Mischungen hiervon.

Beispiele für Ester als einsetzbare Lösungsmittel sind Methylacetat, Ethylacetat, 1-Methoxy-2-propylacetat, n-Propylacetat, i-Propylacetat, Ethoxypropylacetat, Butylacetat, Methylpropionat, Ethylpropionat, Glykoletheracetate, Butylglykolacetat, Propylenglykoldiacetat, Ethyllactat oder Mischungen hiervon.

Beispiele für Ether als einsetzbare Lösungsmittel sind Diethylether, Dipropylether, Tetrahydrofuran, Ethylenglykolethylether, Ethylenglycolmethylether, Triethylenglykolbutylether, Tetraethylenglykolmethylether, Tetraethylenglykolbutylether, Dipropylenglykoldimethylether, Propylenglykolbutylether, 1-Methoxy-2-propanol, 3-Methoxy-3-methyl-1-butanol oder Mischungen hiervon.

Beispiele für Amide als einsetzbare Lösungsmittel sind Dimethylacetamid, Dimethylformamid, Formamid, N-Methylformamid, N-Methylpyrrolidon und 2-Pyrrolidon.
Beispiele für Kohlenwasserstoffe als einsetzbare Lösungsmittel sind Terpene, wie Pinen, Limonen oder Terpinolen, aliphatische Kohlenwasserstoffe, wie Hexan, Heptan, Octan oder Testbenzin, aromatische Kohlenwasserstoffe, wie Toluol oder Xylol.

Bei einer Ausführungsform wird das optional wenigstens eine Lösungsmittel der zum Aufbau der Komponente B des erfindungsgemäß herzustellenden Brillenglases einsetzbaren Drucktinte, insbesondere 3D-Drucktinte, aus der Gruppe, bestehend aus Isopropanol, Ethanol, Butanol, Diisobutylketon, Butylglykol, Butylglykolacetat, Propylenglykoldiacetat, Dipropylenglykoldimethylether, Ethyllactat, Ethoxypropylacetat und Mischungen hiervon, ausgewählt.

Bei einer Ausführungsform weist das optional wenigstens eine Lösungsmittel einen Flammpunkt von mindestens 61°C auf.

Bei einer bevorzugten Ausführungsform liegt der Anteil des optional vorhandenen, wenigstens einen Lösungsmittel in der zum Aufbau der Komponente B des erfindungsgemäß herzustellenden Brillenglases einsetzbaren Drucktinte, vorzugsweise 3D-Drucktinte, in einem Bereich von 0 Gew.-% bis 10 Gew.-%, bevorzugt in einem Bereich von 0 Gew.-% bis 7,7 Gew.-%, besonders bevorzugt in einem Bereich von 0,1 Gew.-% bis 6,3 Gew.-% und ganz besonders bevorzugt in einem Bereich von 0,1 Gew.-% bis 5,2 Gew.-%, jeweils bezogen auf das Gesamtgewicht der Drucktinte, vorzugsweise 3D-Drucktinte. Bei einer besonders bevorzugten Ausführungsform umfasst die zum Aufbau der Komponente B des erfindungsgemäß herzustellenden Brillenglases einsetzbare Drucktinte, vorzugsweise 3D-Drucktinte, kein Lösungsmittel.

Die zum Aufbau der Komponente B des erfindungsgemäß herzustellenden Brillenglases einsetzbare Drucktinte, vorzugsweise 3D-Drucktinte, weist bevorzugt eine Oberflächenspannung aus einem Bereich von 10 mN/m bis 80 mN/m, besonders bevorzugt aus einem Bereich von 15 mN/m bis 40 mN/m und ganz bevorzugt aus einem Bereich von 18 mN/m bis 35 mN/m auf. Liegt die Oberflächenspannung unter 10 mN/m, werden die Tropfen am Druckkopf zu groß für die gewünschte Anwendung. Liegt die Oberflächenspannung über 80 mN/m, bilden sich keine definierten Tropfen der Drucktinte am Druckkopf. Die Oberflächenspannung wird vorzugsweise bei einer Temperatur von 25°C mit dem Gerät DSA 100 der Firma Krüss und der Pendant-Drop-Methode bestimmt.

Die Viskosität der zum Aufbau der Komponente B des erfindungsgemäß herzustellenden Brillenglases einsetzbaren Drucktinte, vorzugsweise 3D-Drucktinte, liegt bevorzugt in einem Bereich von 4 mPa·s bis 56 mPa·s, weiter bevorzugt in einem Bereich von 7 mPa·s bis 45 mPa·s, besonders bevorzugt in einem Bereich von 9 mPa·s bis 34 mPa·s, und ganz besonders bevorzugt in einem Bereich von 10 mPa·s bis 22 mPa·s. Die Viskosität wird vorzugsweise mit einem Rheometer C-VOR 150 der Fa. Malvern mit der Vorgabe einer Winkelgeschwindigkeit von 5,2 rad/sec bei 25°C gemessen.

Bei einer Ausfûhrungsform der Erfindung kann die zum Aufbau der Komponente B des erfindungsgemäß herzustellenden Brillenglases einsetzbare Drucktinte, vorzugsweise 3D-Drucktinte, wenigstens ein Farbmittel umfassen. Als Farbmittel können im umgebenden Medium lösliche oder dispergierbare, bunte oder unbunte Farbstoffe zum Einsatz kommen. In Abhängigkeit vom zu erzielenden Effekt und/oder von dem zu erzielenden optischen Eindruck können als Farbmittel alternativ oder zusätzlich zu den Farbstoffen auch im umgebenden Medium unlösliche Pigmente eingesetzt werden. Als Pigmente werden vorzugsweise Effektpigmente, wie Metalleffektpigmente oder Perlglanzpigmente, organische und/oder anorganische Pigmente, verwendet. Der Gesamtanteil an Farbmittel liegt in der zum Aufbau der Komponente B des erfindungsgemäß herzustellenden Brillenglases einsetzbaren Drucktinte, vorzugsweise 3D-Drucktinte, bevorzugt in einem Bereich von 0,0 Gew.-% bis 66,0 Gew.-%, weiter bevorzugt in einem Bereich von 0,01 Gew.-% bis 53,1 Gew.-%, besonders bevorzugt in einem Bereich von 0,1 Gew.-% bis 42,3 Gew.-% und ganz besonders bevorzugt in einem Bereich von 0,11 Gew.-% bis 27,7 Gew.-%, jeweils bezogen auf das Gesamtgewicht der Drucktinte, vorzugsweise 3D-Drucktinte. Der Gesamtanteil an Farbmittel umfasst den Anteil aller in der Drucktinte, vorzugsweise 3D-Drucktinte, vorliegenden Farbmittel, unabhängig davon, ob es sich um Farbstoffe, Pigmente, Mischungen davon, Mischungen unterschiedlicher Farbstoffe, Mischungen unterschiedlicher Pigmente etc. handelt.

Die zum Aufbau der Komponente B des erfindungsgemäß herzustellenden Brillenglases einsetzbare Drucktinte, vorzugsweise 3D-Drucktinte, wird vorzugsweise durch Mischen aller Komponenten unter Rühren hergestellt, wobei das wenigstens eine Farbmittel, sofern vorhanden, vorgelegt und zunächst mit einer geringen Menge an strahlungshärtbarer Komponente und/oder Lösungsmitel gelöst oder dispergiert wird und anschließend die restlichen Komponenten zugefügt werden.

Die zum Aufbau der Komponente B des erfindungsgemäß herzustellenden Brillenglases einsetzbare Drucktinte, vorzugsweise 3D-Drucktinte, kann weiterhin optional wenigstens ein Additiv umfassen. Der Drucktinte, vorzugsweise 3D-Drucktinte, können beispielsweise Dispergiermittel, Antiabsetzmittel, Netzmittel, einschließlich Antikrater- oder Verlaufsadditiven, Biozide, UV-Absorber oder Mischungen hiervon zugesetzt werden.

Dispergiermittel helfen eine homogene Verteilung aller festen Bestandteile in der Drucktinte, vorzugsweise 3D-Drucktinte, zu erreichen. Insbesondere wird eine mögliche Agglomeration der Pigmente vermieden. Als Dispergiermittel können beispielsweise Solsperse 20000, Solsperse 32500, jeweils Fa. Avecia K.K., Disperbyk-102, Disperbyk-106, Disperbyk-111, Disperbyk-161, Disperbyk-162, Disperbyk-163, Disperbyk-164, Disperbyk-166, Disperbyk-180, Disperbyk-190, Disperbyk-191 oder Disperbyk-192, jeweils Fa. Byk-Chemie GmbH, Verwendung finden.

Antiabsetzmittel sollen das Absetzen, insbesondere von Pigmenten in der Drucktinte, vorzugsweise 3D-Drucktinte, verhindern. Beispiele für einsetzbare Antiabsetzmittel sind Byk-405 (Fa. Byk-Chemie GmbH) in Verbindung mit pyrogenem Siliziumdioxid, modifizierte Harnstoffe wie Byk-410, Byk-411 oder Wachse wie Ceramat 250, Cerafak103, Cerafak 106 oder Ceratix 8461, jeweils Fa. Byk-Chemie GmbH.

Netzmittel sind wichtig für die Funktion des Druckkopfs, da auch interne Strukturen, wie beispielsweise Kanäle, Filter, Düsenvorkammern etc. benetzt werden. Beispiele geeigneter Netzmittel umfassen Fettsäurealkylester, Acetylenderivate, fluorierte Ester oder fluorierte Polymere.

Biozide können Drucktinten, vorzugsweise 3D-Drucktinten, zugesetzt werden, um ein Wachstum von Mikroorganismen zu verhindern. Als Biozid können beispielsweise Polyhexamethylenbiguanide, Isothiazolone, Isothiazolinone, wie z.B. 5-Chloro-2-methyl-4-isothiazolin-3-on, 2-Methyl-4-isothiazolin-3-on oder Mischungen hiervon verwendet werden.

Die Auswahl des geeigneten UV-Absorbers, der kompatibel mit den weiteren Komponenten der Drucktinte, insbesondere 3D-Drucktinte, und dem 3D-Druckverfahren sein muss, sowie die Optimierung der Konzentration zur Erzielung einer gewünschten UV-Absorptionseigenschaft kann z.B. mit Hilfe von Simulationsprogrammen unter Berücksichtigung geeigneter Werkstoffdatenbanken bestimmt werden.

Der DE 69534779 T2 entnimmt man eine Auswahl geeigneter UV-Absorber für Brillengläser, welche auch in der zum Aufbau der Komponente B des erfindungsgemäß herzustellenden Brillenglases einsetzbaren Drucktinte, vorzugsweise 3D-Drucktinte, eingesetzt werden können. Demzufolge kann der UV-Absorber beispielsweise 2(2'-Hydroxy-5'-methyl-phenyl)benzotriazol, 2-Hydroxy-4-n-acetoxybenzophenon, 2(2'Hydroxy-5-5-octylphenyl)benzotriazol, 2(2'-Hydroxy-3',6'(1,1-dimethylbenzylphenyl)benzotriazol, 2(2'-Hydroxy-3',5'-di-t-amylphenyl)benzotriazol, bis[2-Hydroxy-5-methyl-3-(benzotriazol-2-yl)phenyl]-methan, bis[2-Hydroxy-5-t-octyl-3(benzotriazol-2-yl)phenyl]-methan, 2-Hydroxy-4-(2-acrylocyloxy-ethoxybenzophenon, 2-Hydroxy-4-(2-hydroxy-3-methacryloxy)propoxybenzophenon, 2,2'-Dihydroxy-4-methoxybenzophenon, 2,4-Dihydroxybenzophenon, 2,2'-Dihydroxy 4,4-dimethoxybenzophenon, 2,2',4,4' Tetrahydroxybenzophenon, Ethyl-2-Cyano-3,3-diphenylacrylat, 2-Ethexyl-2-Cyano-3,3-Diphenylacrylat, 2',2',4-Trihydroxybenzophenon, 2-Hydroxy-4-acryloyloxyethoxybenzophenon (Polymer), 2-Hydroxy-4-acryloyloxyethoxybenzophenon, 4-Hydroxy-4-methoxybenzophenon, 2-Hydroxy-4-n-octoxybenzophenon oder Mischungen davon umfassen.

Bevorzugt umfasst die zum Aufbau der Komponente B des erfindungsgemäß herzustellenden Brillenglases einsetzbare Drucktinte, vorzugsweise 3D-Drucktinte, 2(2'Hydroxy-5-5-octylphenyl)benzotriazol, 2(2'-Hydroxy-5'-methyl-phenyl)benzotriazol, 2(2'Hydroxy-5-5-octylphenyl)benzotriazol, 2-Hydroxy-4-(2-hydroxy-3-methacryloxy)propoxybenzophenon oder Mischungen davon, besonders bevorzugt 2(2'Hydroxy-5-5-octylphenyl)benzotriazol, 2(2'Hydroxy-5-5-octylphenyl)benzotriazol oder Mischungen davon als UV-Absorber.

Der Gesamtanteil an wenigstens einem UV-Absorber liegt in der zum Aufbau der Komponente B des erfindungsgemäß herzustellenden Brillenglases einsetzbaren Drucktinte, vorzugsweise UV-Drucktinte, bevorzugt in einem Bereich von 0,01 Gew.-% bis 5,1 Gew.-%, besonders bevorzugt in einem Bereich von 0,07 Gew.-% bis 3,9 Gew.-%, und besonders bevorzugt in einem Bereich von 0,09 Gew.-% bis 3,1 Gew.-%, jeweils bezogen auf das Gesamtgewicht der Drucktinte, vorzugsweise 3D-Drucktinte. Vorstehend genannte Bereiche beziehen sich sowohl auf die Verwendung eines UV-Absorbers als auch auf die Verwendung einer Mischung von UV-Absorbern.

Der Gesamtanteil an wenigstens einem Additiv liegt in der zum Aufbau der Komponente B des erfindungsgemäß herzustellenden Brillenglases einsetzbaren Drucktinte, vorzugsweise 3D-Drucktinte, bevorzugt in einem Bereich von 0,0 Gew.-% bis 10,0 Gew.-%, besonders bevorzugt in einem Bereich von 0,01 Gew.-% bis 5,0 Gew.-%, und ganz besonders bevorzugt in einem Bereich von 0,02 Gew.-% bis 3,0

Gew.-%, jeweils bezogen auf das Gesamtgewicht der Drucktinte, vorzugsweise 3D-Drucktinte. Die genannten Bereiche gelten für die Verwendung einer Art an Additiv, einer Mischung aus voneinander verschiedenen Additivarten sowie einer Mischung aus voneinander verschiedenen Additiven einer Additivart.

Es versteht sich von selbst, dass die einzelnen Komponenten der zum Aufbau der Komponente B des erfindungsgemäß herzustellenden Brillenglases einsetzbaren Drucktinte, vorzugsweise 3D-Drucktinte, so auszuwählen sind, dass sich deren Anteile nicht auf über 100 Gew.-% addieren.

Wird für die Komponente B eine ortsabhängige Brechungsindexverteilung berechnet, wird der Brechungsindex verschiedener Drucktinten, vorzugsweise 3D-Drucktinten, mittels Versuchsreihen vorzugsweise nach deren Aushärtung ermittelt.

Das Verfahren zur Herstellung eines Brillenglases umfassend wenigstens die Komponenten A, B und C umfasst die folgenden Schritte:
a) Bereitstellen und optional Fixieren des Dünnstglas der Komponente A oder C,
b) Bereitstellen eines dreidimensionalen Modells der Komponente B,
c) Digitales Zerschneiden des dreidimensionalen Modells aus Schritt b) in einzelne zweidimensionale Lagen,
d) Bereitstellen wenigstens einer Drucktinte, vorzugsweise 3D-Drucktinte, wobei die Drucktinte wenigstens eine strahlungshärtbare Komponente umfasst,
e) Aufbau der Komponente B aus der Summe der einzelnen zweidimensionalen Lagen aus Schritt c) mittels eines Druckvorgangs auf einem der Dünnstgläser der Komponenten A oder C,
f) Aushärtung des der Komponente B mittels UV-Licht, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann,
g) optional Fräsen und/oder Schleifen und/oder Drehen und/oder Polieren der in Schritt f) erhaltenen Oberfläche der Komponente B, welche nicht an eines der Dünnstgläser der Komponente A oder C angrenzt,
h)
   h1) für den Fall, dass in Schritt a) das Dünnstglas der Komponente A bereitgestellt wurde: Verbinden der Rückfläche R_{B} der Komponente B des in Schritt f) erhaltenen Brillenglases umfassend die Komponenten A und B, mit der Vorderfläche V_{DC} des Dunnstglases der Komponente C oder Beschichten der Rückfläche R_{B} der Komponente B mit wenigstens einer Funktionsschicht F_{C};
   h2) für den Fall dass in Schritt a) das Dünnstglas der Komponente C bereitgestellt wurde: Verbinden der Vorderfläche V_{B} der Komponente B des in Schritt f) erhaltenen Brillenglases umfassend die Komponenten B und C mit der Rückfläche R_{DA} des Dünnstglases der Komponente A oder Beschichten der Vorderfläche V_{B} der Komponente B mit wenigstens einer Funktionsschicht F_{A},
i) Formranden des in Schritt h) erhaltenen Brillenglases umfassend die Komponenten A, B und C.

Das Verbinden in Schritt h) erfolgt bevorzugt stoffschlüssig und/oder formschlüssig mittels eines Klebemittels oder eines Bonding-Verfahrens. Im Rahmen dieser Erfindung werden unter "stoffschlüssigen Verbindungen" Verbindungen verstanden, welche die jeweiligen Komponenten des erfindungsgemäß herzustellenden Brillenglases, vorzugsweise die Komponenten A und B bzw. die Komponenten B und C bzw. die Komponenten A und C zusammenhalten. Im Rahmen dieser Erfindung werden unter "formschlüssigen Verbindungen" Verbindungen verstanden, bei denen die einzelnen Komponenten des erfindungsgemäß herzustellenden Brillenglases, vorzugsweise die Komponenten A und B bzw. die Komponenten B und C bzw. die Komponenten A und C, passgenau zusammengefügt werden können. Geringfügige Abweichungen in der Oberflächentopographie der beiden zusammenzufügenden Oberflächen können beispielsweise mittels eines Klebemittels verfüllt werden. Um die einzelnen Komponenten des erfindungsgemäß herzustellenden Brillenglases formschlüssig miteinander verbinden zu können, sollten die Krümmungsradien der jeweils miteinander zu verbindenden Komponenten bevorzugt weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen. Sowohl stoffschlüssige als auch formschlüssige Verbindungen können beispielsweise durch Wärmebeaufschlagung und/oder mittels eines Klebemittels erreicht werden.

Bevorzugt erfolgt das Verbinden in Schritt h) mittels eines Klebemittels, besonders bevorzugt mittels eines Klebemittels basierend auf einer aminkatalysierten Thiolhärtung von Epoxidharzen gemäß WO 2015/121341 A1. Sind die Vorderflächen und die Rückflächen der Komponenten A, B und C jeweils sphärisch geformt, weisen aber an der Grenzfläche zwischen den Komponenten A und B und/oder an der Grenzfläche zwischen den Komponenten B und C keine identischen Krümmungsradien auf, so werden die durch die Krümmungsunterschiede beim Zusammenfügen der einzelnen Komponenten entstehenden Hohlräume vorzugsweise mittels eines Klebemittels verfüllt. Auch zum Verfüllen von Hohlräumen wird bevorzugt ein Klebemittel basierend auf einer aminkatalysierten Thiolhärtung von Epoxidharzen gemäß WO 2015/121341 A1 eingesetzt. Bevorzugt weichen nicht identische Krümmungsradien der einzelnen Komponenten weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander ab. Geringfügige Abweichungen der Krümmungsradien können dahingehend ausgenutzt werden, dass gegebenenfalls auftretende Lufteinschlüsse im Klebemittel während des Zusammenfügens durch einfaches Anpressen des Dünnstglases der Komponente A oder C in Richtung Zylinderrandfläche der Komponente B entfernt werden können. Sind die Grenzflächen der Komponenten A, B und C jeweils plan geformt, können diese ebenfalls beispielsweise mittels eines Klebemittels oder eines Bonding-Verfahrens stoffschlüssig und formschlüssig zusammengefügt werden.

Die Verbindung in Schritt h) kann auch mittels eines Bonding-Verfahrens erfolgen. Das Bonding-Verfahren kann alternativ oder zusätzlich zu einem Klebemittel zum Verbinden in Schritt h) herangezogen werden. Hierzu wird das Dünnstglas der Komponente A bzw. das Dünnstglas der Komponente C bevorzugt bis zur Transformationstemperatur T_{G} des jeweiligen Dünnstglases, bevorzugt unter einer Schutzgasatmosphäre, erwärmt und mit der jeweils zu verbindenden Vorderfläche bzw. Rückfläche der Komponente B in Kontakt gebracht, beispielsweise durch Hineindrücken der Vorderfläche oder der Rückfläche der Komponente B in das erwärmte Dünnstglas. Komponente B dient hier zum einen als Formschale zur Umformung des Dünnstglases, zum anderen entfällt beim Bonding-Verfahren der Einsatz eines Klebemittels. Bevorzugt wird die Temperaturbelastung der Komponente B möglichst gering gehalten wird, indem Komponente B möglichst kurz, bevorzugt weniger als 5 Sekunden, besonders bevorzugt weniger als 2 Sekunden, einem zur Erwärmung des Dünnstglases dienenden Bereich, beispielweise einem Ofen, ausgesetzt ist. Diese kurzzeitige Temperaturbelastung der Komponente B bewirkt keine Veränderung der optisch wirksamen Zielfläche, da die Wärmekapazität des Dünnstglases in Anbetracht dessen geringer Masse gering gegenüber der Masse der Komponente B ist. Bei einer Ausführungsform kann die zu verbindende Oberfläche der Komponente B mit einer temperaturbeständigeren Schutzschicht geschützt werden. Hierbei kann es sich beispielsweise um eine Beschichtungszusammensetzung, wie z.B. in EP 2 578 649 A1, insbesondere in EP 2 578 649 A1, Anspruch 1, offenbart, oder um eine Metalloxid-, Metallhydroxid- und/oder Metalloxidhydratschicht, handeln. Die Schutzschicht kann weiterhin als Primer zum Ausgleich der Ausdehnungsunterschiede dienen.

Bei einer Ausführungsform der Erfindung werden die letzten ein bis vier, bevorzugt die letzten ein bis zwei gedruckten Lagen der Komponente B des erfindungsgemäß herzustellenden Brillenglases nicht ausgehärtet. Das Dünnstglas der Komponente A oder der Komponente C kann dann auf diese Oberfläche umfassend wenigstens eine nicht ausgehärtete Lage der Komponente B aufgelegt werden. Die Verbindung in Schritt h) zwischen den Komponenten A und B bzw. zwischen den Komponenten B und C kann in diesem Fall mittels einer UV-Belichtung durch das entsprechende Dünnstglas hindurch erfolgen, wobei hierbei gleichzeitig die Komponente B noch vollständig ausgehärtet werden kann. Bei dieser Ausführungsform kann ein oberflächenaktiviertes Dünnstglas eingesetzt werden. Das Drucken, vorzugsweise 3D-Drucken, der Komponente B des erfindungsgemäß herzustellenden Brillenglases beginnt mit der Bereitstellung eines dreidimensionalen Modells, vorzugsweise CAD-Modells. Dieses dreidimensionale Modell definiert die dreidimensionale Geometrie der nicht durch das Dünnstglas der Komponente A oder C vorgegebenen Oberfläche der Komponente B sowie in Kombination der Komponenten A, B und C das Volumen des Brillenglases.

Bei einer Ausführungsform der Erfindung endet der Auftrag der Drucktinte, insbesondere 3D-Drucktinte, nicht in der Mitte der Vorderfläche V_{B} bzw. der Rückfläche R_{B} der Komponenten B des erfindungsgemäß herzustellenden Brillenglases. Bevorzugt endet Auftrag der Drucktinte, insbesondere 3D-Drucktinte, nicht innerhalb eines Kreises mit einem Radius von wenigstens 10 mm, bevorzugt wenigstens 15 mm, weiter bevorzugt wenigstens 24 mm und besonders bevorzugt wenigstens 32 mm zum Ferndurchblickpunkt bei Einstärkenbrillengläsern bzw. zum Prismenmesspunkt bei Mehrstärken-/Gleitsichtbrillengläsern liegt.

Bei einer Ausführungsform der Erfindung umfasst das erfindungsgemäß hergestellte Brillenglas wenigstens eine der Komponenten A, B oder C mehrfach. Bei dieser Ausführungsform kann das erfindungsgemäß hergestellte Brillenglas ausgehend von der objektseitigen Vorderfläche zur augenseitigen Rückfläche des erfindungsgemäß hergestellten Brillenglases beispielsweise die Komponenten A, B, A', B', C umfassen. Vorstehende Ausführungen zum Verbinden der Komponenten des erfindungsgemäß hergestellte Brillenglases können auf die Gegenwart weiterer Komponenten im erfindungsgemäß hergestellten Brillenglas entsprechend übertragen werden.

Im Folgenden wird die Erfindung durch einige Beispiele näher erläutert, welche die Erfindung jedoch nicht beschränken.

### Berechnung von erfindungsgemäß herzustellenden Brillengläsern

Für die nachstehenden Beispiele ist jeweils:
1 = Vorderfläche V_{DA} des Dünnstglases der Komponente A
2 = Rückfläche R_{DA} des Dünnstglases der Komponente A = Vorderfläche V_{B} der Komponente B
3 = Rückfläche R_{B} der Komponente B = Vorderfläche V_{DC} des Dünnstglases der Komponente C
4 = Rückfläche R_{DC} des Dünnstglases der Komponente C
¹⁾ Die Dicke der Fläche 4 beschreibt den Abstand zum Augendrehpunkt.

### Beispiel 1

Berechnung eines durch sphärische Oberflächen begrenzten Einstärkenglases mit sph -4,0 D, bei welchem für die Dünnstgläser der Komponenten A und C ein konstanter Brechungsindex von n_{d} = 1,523 verwendet wurde. Für die Komponente B wurde ebenfalls ein konstanter Brechungsindex von n_{d} = 1,523 zugrunde gelegt. Die nachstehende Tabelle 3 veranschaulicht die Daten des Systems Brillenglas - Auge.

**Tabelle 3**

| | Krümmungsradius [mm] | Dicke [mm] | n_{d} | Durchmesser [mm] |
|---|---|---|---|---|
| 1 | 120,44 | 0,1 | 1,523 | 60 |
| 2 | 120,44 | 1,0 | 1,523 | 60 |
| 3 | 62,58 | 0,1 | 1,523 | 60 |
| 4 | 62,58 | 25¹⁾ | 1,0 | 60 |

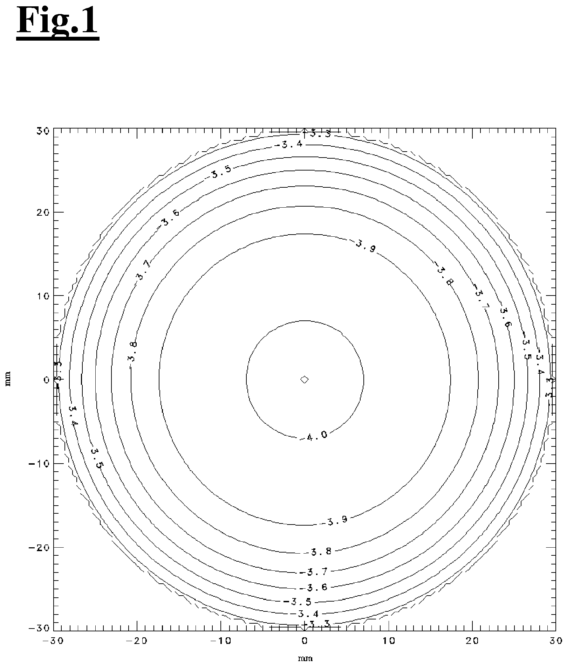

In Figur 1 wird die Verteilung der mittleren Wirkung für das blickende Auge des Brillenträgers über die gesamte Vorderfläche des berechneten Brillenglases aus Beispiel 1 im Durchmesser 60 mm dargestellt. Hierbei drehte sich das Auge um den Augendrehpunkt. Figur 1 ist weiterhin zu entnehmen, dass sich die mittlere Wirkung des Brillenglases von der Mitte zum Rand hin von sph -4,0 D zu sph - 3,2 ändert.

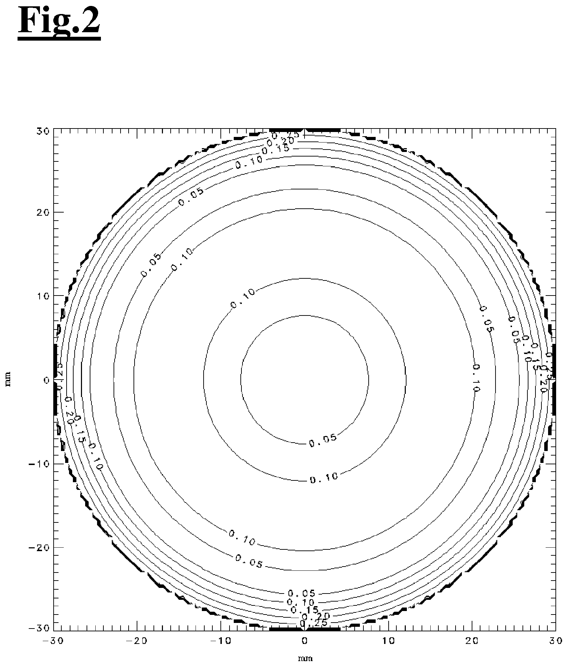

In Figur 2 wird die Verteilung der astigmatischen Abweichung für das blickende Auge des Brillenträgers über die gesamte Vorderfläche des berechneten Brillenglases aus Beispiel 1 im Durchmesser 60 mm dargestellt. Auch hier drehte sich das Auge um den Augendrehpunkt. Figur 2 ist weiterhin zu entnehmen, dass diese astigmatische Abweichung sich von der Mitte zum Rand hin von 0,0 D auf 0,3 D erhöht.

### Beispiel 2

Berechnung eines durch sphärische Oberflächen begrenzten Einstärkenglases mit sph -4,5 D, bei welchem für die Dünnstgläser der Komponenten A und C ein konstanter Brechungsindex von n_{d} = 1,523 verwendet wurde. Für die Komponente B wurde eine ortsabhängige berechnete Brechungsindexverteilung (in nachstehender Tabelle 4: GRIN (Gradientenindex)) zugrunde gelegt. Die nachstehende Tabelle 4 veranschaulicht die Daten des Systems Brillenglas - Auge.

**Tabelle 4**

| | Krümmungsradius [mm] | Dicke [mm] | n_{d} | Durchmesser [mm] |
|---|---|---|---|---|
| 1 | 120,44 | 0,1 | 1,523 | 60 |
| 2 | 120,44 | 1,0 | GRIN | 60 |
| 3 | 62,58 | 0,1 | 1,523 | 60 |
| 4 | 62,58 | 25¹⁾ | 1,0 | 60 |

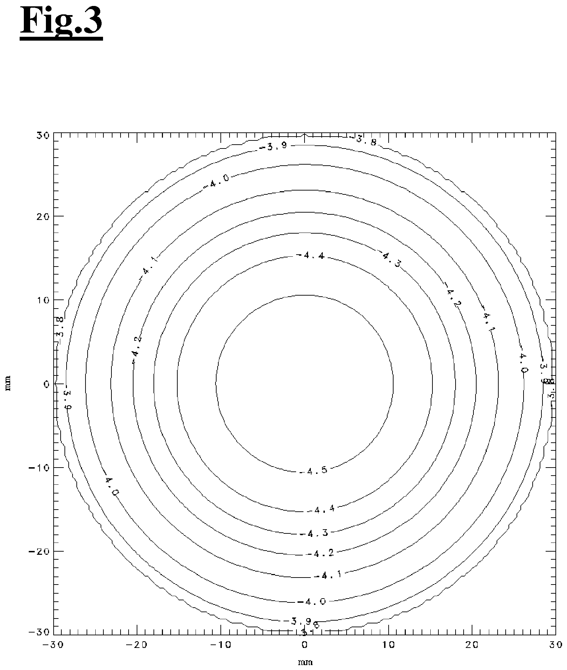

In Figur 3 wird die Verteilung der mittleren Wirkung für das blickende Auge des Brillenträgers über die gesamte Vorderfläche des berechneten Brillenglases aus Beispiel 2 im Durchmesser 60 mm dargestellt. Hierbei drehte sich das Auge um den Augendrehpunkt. Figur 3 ist weiterhin zu entnehmen, dass sich die mittlere Wirkung des Brillenglases von der Mitte zum Rand hin von sph -4,5 D zu sph - 3,8 ändert.

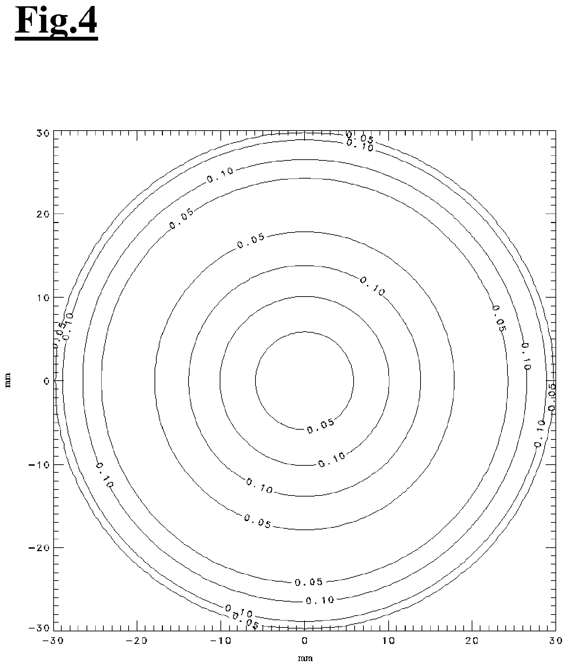

In Figur 4 wird die Verteilung der astigmatischen Abweichung für das blickende Auge des Brillenträgers über die gesamte Vorderfläche des berechneten Brillenglases aus Beispiel 2 im Durchmesser 60 mm dargestellt. Auch hier drehte sich das Auge um den Augendrehpunkt. Figur 4 ist weiterhin zu entnehmen, dass diese astigmatische Abweichung in der Mitte 0,0 D beträgt. Beim Blick zur Seite erreicht die astigmatische Abweichung einen Maximalwert von 0,12 D.

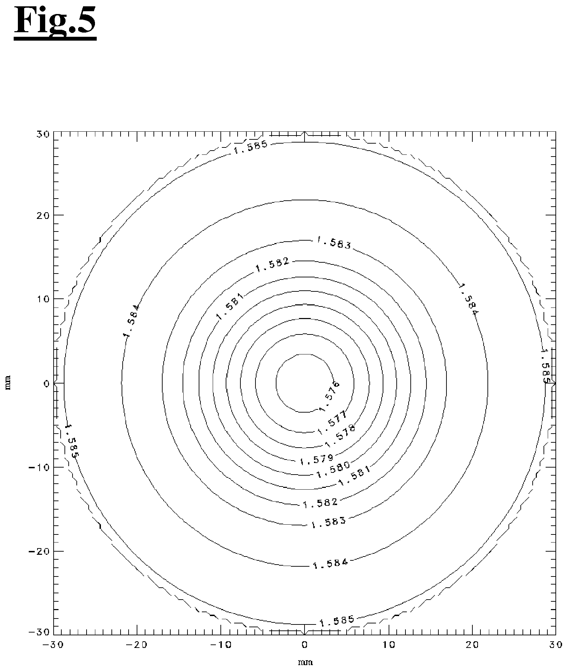

In Figur 5 wird die radiale Brechungsindexverteilung innerhalb der Komponente B des Brillenglases aus Beispiel 2 gezeigt. Für die Berechnung der radialen Brechungsindexverteilung wurde nachstehende Formel zugrunde gelegt: n_{d} = 1,523 + c1 + c2·h² + c3·h⁴ + c4·h⁶ + c5·h⁸, mit
c1 = 0,524136177 · 10⁻¹
c2 = 0,496881618 · 10⁻⁴
c3 = -0,108055871 · 10⁻⁶
c4 = 0,104110487 · 10⁻⁹
c5 = -0,352329220 · 10⁻¹³
wobei gilt: h² = x² + y² (Abstand von der optischen Achse).

Wie den zu Beispiel 2 gehörenden Figuren zu entnehmen ist, werden durch den Einsatz einer ortsabhängigen berechneten Brechungsindexverteilung (Gradientenindex, GRIN) eine Wirkungsänderung des Brillenglases aus Beispiel 2 sowie eine Änderung der optischen Korrektion für das blickende Auge herbeigeführt, obwohl die Oberflächentopographie der Dünnstgläser der Komponenten A und C nicht verändert wurde.

### Beispiel 3

Berechnung eines durch sphärische Oberflächen begrenzten Einstärkenglases mit sph -4,4 D, bei welchem für die Dünnstgläser der Komponenten A und C ein konstanter Brechungsindex von n_{d} = 1,523 verwendet wurde. Für die Komponente B wurde ebenfalls ein konstanter Brechungsindex von n_{d} = 1,5754 zugrunde gelegt. Die nachstehende Tabelle 5 veranschaulicht die Daten des Systems Brillenglas - Auge.

**Tabelle 5**

| | Krümmungsradius [mm] | Dicke [mm] | n_{d} | Durchmesser [mm] |
|---|---|---|---|---|
| 1 | 120,44 | 0,1 | 1,523 | 60 |
| 2 | 120,44 | 1,0 | 1,5754 | 60 |
| 3 | 62,58 | 0,1 | 1,523 | 60 |
| 4 | 62,58 | 25¹⁾ | 1,0 | 60 |

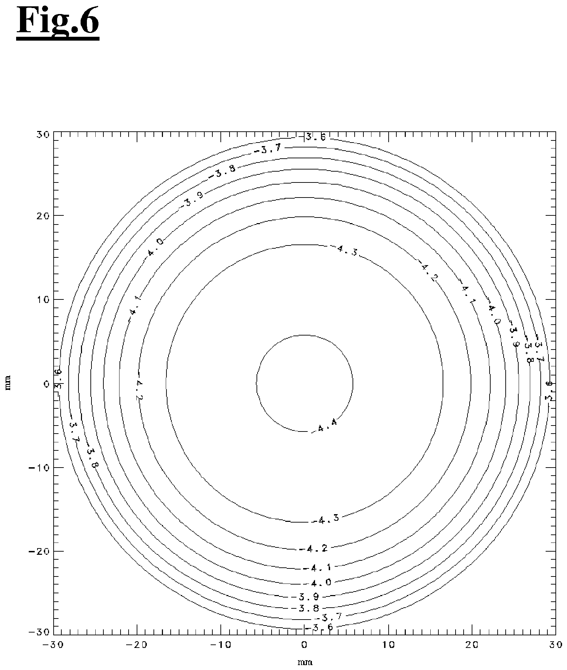

In Figur 6 wird die Verteilung der mittleren Wirkung für das blickende Auge des Brillenträgers über die gesamte Vorderfläche des berechneten Brillenglases aus Beispiel 3 im Durchmesser 60 mm dargestellt. Hierbei drehte sich das Auge um den Augendrehpunkt. Figur 6 ist weiterhin zu entnehmen, dass sich die mittlere Wirkung des Brillenglases von der Mitte zum Rand hin von sph -4,4 D zu sph - 3,6 ändert.

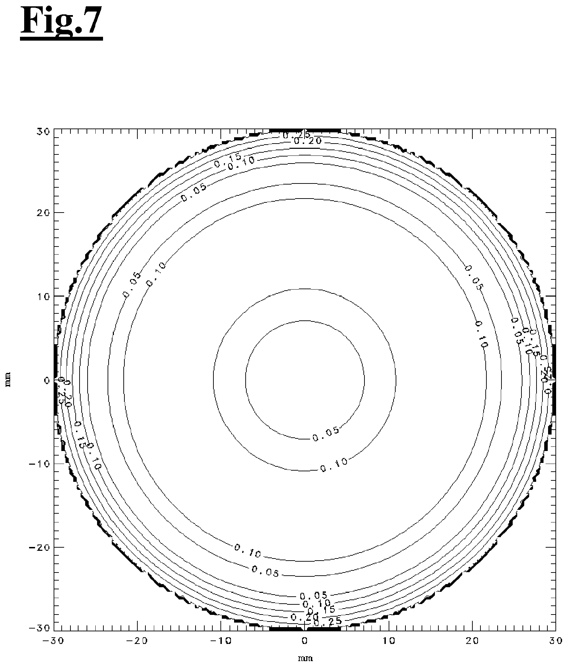

In Figur 7 wird die Verteilung der astigmatischen Abweichung für das blickende Auge des Brillenträgers über die gesamte Vorderfläche des berechneten Brillenglases aus Beispiel 3 im Durchmesser 60 mm dargestellt. Auch hier drehte sich das Auge um den Augendrehpunkt. Figur 7 ist weiterhin zu entnehmen, dass diese astigmatische Abweichung sich von der Mitte zum Rand hin von 0,0 D auf 0,3 D erhöht.

### Beispiel 4

Berechnung eines durch sphärische Oberflächen begrenzten Einstärkenglases mit sph -4,0 D, bei welchem für die Dünnstgläser der Komponenten A und C ein konstanter Brechungsindex von n_{d} = 1,523 verwendet wurde. Für die Komponente B wurde ebenfalls ein konstanter Brechungsindex von n_{d} = 1,660 zugrunde gelegt. Die nachstehende Tabelle 6 veranschaulicht die Daten des Systems Brillenglas - Auge.

**Tabelle 6**

| | Krümmungsradius [mm] | Dicke [mm] | n_{d} | Durchmesser [mm] |
|---|---|---|---|---|
| 1 | 102,90 | 0,1 | 1,523 | 60 |
| 2 | 102,90 | 1,0 | 1,660 | 60 |
| 3 | 63,21 | 0,1 | 1,523 | 60 |
| 4 | 63,21 | 25¹⁾ | 1,0 | 60 |

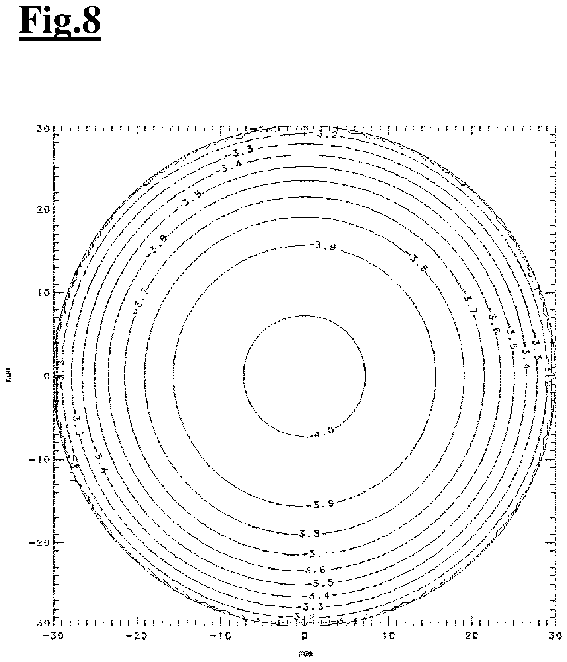

In Figur 8 wird die Verteilung der mittleren Wirkung für das blickende Auge des Brillenträgers über die gesamte Vorderfläche des berechneten Brillenglases aus Beispiel 4 im Durchmesser 60 mm dargestellt. Hierbei drehte sich das Auge um den Augendrehpunkt. Figur 8 ist weiterhin zu entnehmen, dass sich die mittlere Wirkung des Brillenglases von der Mitte zum Rand hin von sph -4,0 D zu sph - 3,1 ändert.

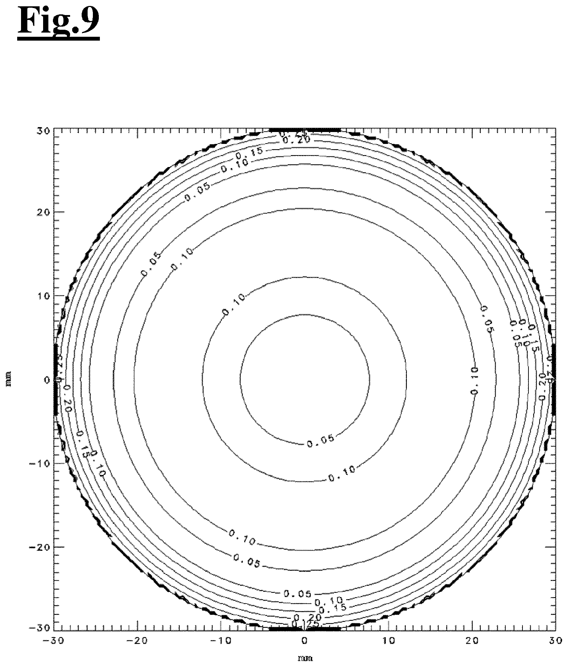

In Figur 9 wird die Verteilung der astigmatischen Abweichung für das blickende Auge des Brillenträgers über die gesamte Vorderfläche des berechneten Brillenglases aus Beispiel 4 im Durchmesser 60 mm dargestellt. Auch hier drehte sich das Auge um den Augendrehpunkt. Figur 9 ist weiterhin zu entnehmen, dass diese astigmatische Abweichung sich von der Mitte zum Rand hin von 0,0 D auf 0,3 D erhöht.

### Beispiel 5

Berechnung eines durch sphärische Oberflächen begrenzten Gleitsichtglases mit sphärischer Korrektion für die Ferne von sph -4,0 D und mit sphärischer Korrektion für die Nähe von sph -3,0 D, bei welchem für die Dünnstgläser der Komponenten A und C ein konstanter Brechungsindex von n_{d} = 1,523 verwendet wurde. Für die Komponente B wurde eine ortsabhängige berechnete Brechungsindexverteilung (in nachstehender Tabelle 7: GRIN (Gradientenindex)) zugrunde gelegt. Die nachstehende Tabelle 7 veranschaulicht die Daten des Systems Brillenglas - Auge.

**Tabelle 7**

| | Krümmungsradius [mm] | Dicke [mm] | n_{d} | Durchmesser [mm] |
|---|---|---|---|---|
| 1 | 102,90 | 0,1 | 1,523 | 60 |
| 2 | 102,90 | 1,0 | GRIN | 60 |
| 3 | 63,21 | 0,1 | 1,523 | 60 |
| 4 | 63,21 | 25¹⁾ | 1,0 | 60 |

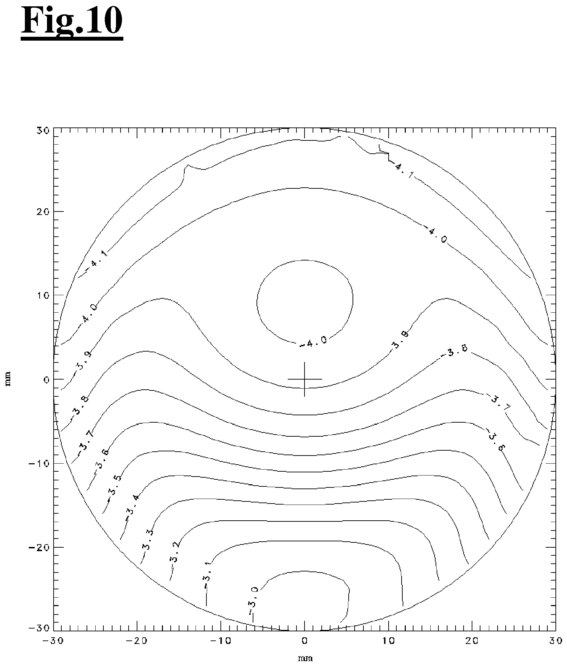

In Figur 10 wird die Verteilung der mittleren Wirkung für das blickende Auge des Brillenträgers über die gesamte Vorderfläche des berechneten Brillenglases aus Beispiel 5 im Durchmesser 60 mm dargestellt. Hierbei drehte sich das Auge um den Augendrehpunkt. Figur 10 ist weiterhin zu entnehmen, dass sich die mittlere Wirkung des Brillenglases vom Fernbereich zum Nahbereich von sphärischer Korrektion für die Ferne von sph -4,0 D zu sphärischer Korrektion für die Nähe von sph - 3,0 ändert.

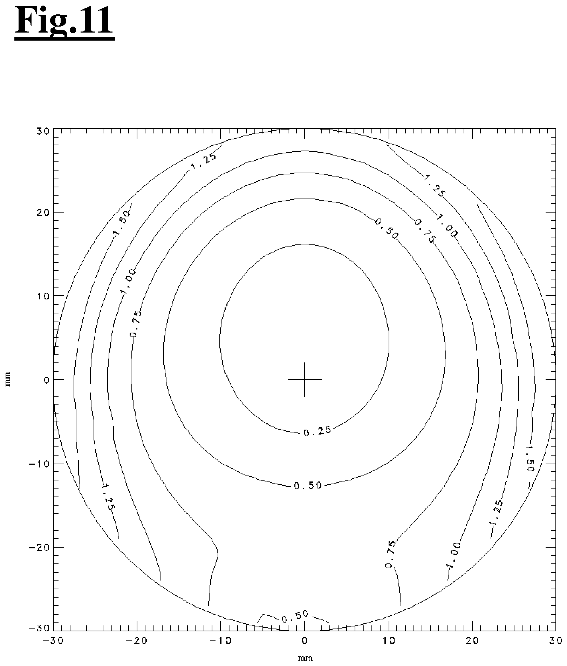

In Figur 11 wird die Verteilung der astigmatischen Abweichung für das blickende Auge des Brillenträgers über die gesamte Vorderfläche des berechneten Brillenglases aus Beispiel 5 im Durchmesser 60 mm dargestellt. Auch hier drehte sich das Auge um den Augendrehpunkt. Die astigmatische Abweichung in der Ferne beträgt 0,0 D und nimmt am Rand des Brillenglases einen Maximalwert von 1,7 D an.

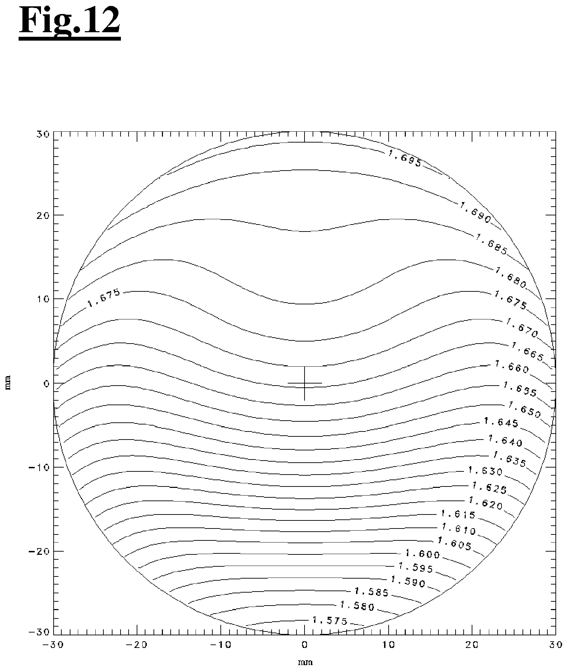

In Figur 12 wird die Brechungsindexverteilung innerhalb der Komponente B des Brillenglases aus Beispiel 5 gezeigt. Für die Berechnung der radialen Brechungsindexverteilung wurde nachstehende Formel zugrunde gelegt: n_{d} = 1,66 + c1 + c3·h² + c4·h⁴ + c5·h⁶ + c6·h⁸ + c12·x² + c14·y + c16·y³, mit
c1 = 0,607519072 · 10⁻²
c3 = -0,695183752 · 10⁻⁴
c4 = 0,252437173 · 10⁻⁷
c5 = 0,261202427 · 10⁻¹⁰
c6 = -0,132339396 · 10⁻¹³
c12 = 0.310744312 · 10⁻⁴
c14 = 0.211793858 · 10⁻²
c16 = -0.144639672 · 10⁻⁷
wobei gilt: h² = x² + y² (Abstand von der optischen Achse).

Wie den zu Beispiel 5 gehörenden Figuren zu entnehmen ist, werden durch den Einsatz einer ortsabhängigen berechneten Brechungsindexverteilung (Gradientenindex, GRIN) eine kontinuierliche Wirkungsänderung des Brillenglases von der Ferne zur Nähe sowie eine Verteilung der astigmatischen Abweichung bewirkt. Es entsteht ein somit ein Brillenglas mit Gleitsichtglaseigenschaften.

## Patentansprüche

1. Verfahren zur Herstellung eines Brillenglases umfassend, ausgehend von der objektseitigen Vorderfläche des Brillenglases zur gegenüberliegenden Rückfläche des Brillenglases, wenigstens die Komponenten A, B und C, wobei die Komponente A wenigstens ein Dünnstglas, die Komponente B wenigstens ein polymeres Material, die Komponente C wenigstens ein Dünnstglas umfasst und das Verfahren die folgenden Schritte umfasst:
a) Bereitstellen und optional Fixieren des Dünnstglases der Komponente A oder C, wobei das Dünnstglas der Komponente A und das Dünnstglas der Komponente C jeweils eine Glaskomposition ausgewählt aus der Gruppe bestehend aus Borosilikatglas, Aluminium-Borosilikatglas und alkalifreiem Borosilikatglas umfasst, die Glaskomposition des Dünnstglases der Komponente A und des Dünnstglases der Komponente C gleich oder verschieden voneinander ist, das Dünnstglas der Komponente A und das Dünnstglas der Komponente C jeweils eine mittlere Dicke aus einem Bereich von 13 µm bis 760 µm aufweist und wobei die mittlere Dicke des Dünnstglases der Komponente A und des Dünnstglases der Komponente C gleich oder verschieden voneinander ist,
b) Bereitstellen eines dreidimensionalen Modells der Komponente B,
c) Digitales Zerschneiden des dreidimensionalen Modells aus Schritt b) in einzelne zweidimensionale Lagen,
d) Bereitstellen wenigstens einer 3D-Drucktinte, wobei die Drucktinte wenigstens eine strahlungshärtbare Komponente umfasst,
e) Aufbau der Komponente B aus der Summe der einzelnen zweidimensionalen Lagen aus Schritt c) mittels eines Druckvorgangs auf einem der Dünnstgläser der Komponenten A oder C,
f) Aushärtung der Komponente B mittels UV-Licht, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann, wobei das polymere Material der Komponente B eine ortsabhängige Brechungsindexverteilung aufweist,
g) optional Fräsen und/oder Schleifen und/oder Drehen und/oder Polieren der in Schritt f) erhaltenen Oberfläche der Komponente B, welche nicht an eines der Dünnstgläser der Komponente A oder C angrenzt,
h)
h1) für den Fall, dass in Schritt a) das Dünnstglas der Komponente A bereitgestellt wurde: Verbinden der Rückfläche R_{B} der Komponente B des in Schritt f) erhaltenen Brillenglases umfassend die Komponenten A und B, mit der Vorderfläche V_{DC} des Dünnstglases der Komponente C;
h2) für den Fall, dass in Schritt a) das Dünnstglas der Komponente C bereitgestellt wurde: Verbinden der Vorderfläche V_{B} der Komponente B des in Schritt f) erhaltenen Brillenglases umfassend die Komponenten B und C mit der Rückfläche R_{DA} des Dünnstglases der Komponente A,
i) Formranden des in Schritt h) erhaltenen Brillenglases umfassend die Komponenten A, B und C.

2. Verfahren nach Anspruch 1, bei dem das Verbinden der jeweils zu verbindenden Komponenten A und B bzw. B und C jeweils mittels eines Klebemittels oder mittels eines Bonding-Verfahrens erfolgt.

3. Verfahren nach einem der vorstehenden Ansprüche, wobei die Krümmungsradien der mittels eines Klebemittels zu verbindenden Komponenten weniger als 1 mm voneinander abweichen.

4. Verfahren nach einem der vorstehenden Ansprüche, wobei die Drucktinte, vorzugsweise 3D-Drucktinte, wenigstens eine strahlungshärtbare Komponente und optional wenigstens ein Farbmittel umfasst und die strahlungshärtbare Komponente wenigstens ein Monomer aus der Gruppe bestehend aus (Meth)acrylatmonomeren, Epoxymonomeren, Vinylmonomeren und Allylmonomeren umfasst und
i) der Gesamtanteil an wenigstens einer Art an monofunktionalem (Meth)acrylatmonomer, Epoxymonomer, Vinyl- oder Allylmonomer oder einer Mischung voneinander verschiedener monofunktionaler (Meth)acrylatmonomere, Epoxymonomere, Vinyl- oder Allylmonomere jeweils in einem Bereich von 0,0 Gew.-% bis 35 Gew.-%, jeweils bezogen auf das Gesamtgewicht der Drucktinte und/oder
ii) der Gesamtanteil an wenigstens einer Art an difunktionalem (Meth)acrylatmonomer, Epoxymonomer, Vinyl- oder Allylmonomer oder einer Mischung voneinander verschiedener difunktionaler (Meth)acrylatmonomere, Epoxymonomere, Vinyl- oder Allylmonomere jeweils in einem Bereich 32,0 Gew.-% bis 99 Gew.-%, jeweils bezogen auf das Gesamtgewicht der Drucktinte und/oder
iii) der Gesamtanteil an wenigstens einer Art an trifunktionalem (Meth)acrylatmonomer, Epoxymonomer, Vinyl- oder Allylmonomer oder einer Mischung voneinander verschiedener trifunktionaler (Meth)acrylatmonomere, Epoxymonomere, Vinyl- oder Allylmonomere jeweils in einem Bereich von 1,0 Gew.-% bis 51,0 Gew.-%, jeweils bezogen auf das Gesamtgewicht der Drucktinte und/oder
iv) der Gesamtanteil an wenigstens einer Art an tetrafunktionalem (Meth)acrylatmonomer, Epoxymonomer, Vinyl- oder Allylmonomer oder einer Mischung voneinander verschiedener tetrafunktionaler (Meth)acrylatmonomere, Epoxymonomere, Vinyl- oder Allylmonomere jeweils in einem Bereich von 0 Gew.-% bis 16 Gew.-%, jeweils bezogen auf das Gesamtgewicht der Drucktinte, liegt
oder
die Drucktinte wenigstens eine monofunktionale strahlungshärtbare Komponente und wenigstens eine difunktionale strahlungshärtbare Komponente im Gewichtsverhältnis 1 : 1 oder wenigstens eine monofunktionale strahlungshärtbare Komponente und wenigstens eine trifunktionale strahlungshärtbare Komponente im Gewichtsverhältnis 1 : 5 oder wenigstens eine difunktionale strahlungshärtbare Komponente und wenigstens eine trifunktionale strahlungshärtbare Komponente im Gewichtsverhältnis 1 : 1 oder wenigstens eine difunktionale strahlungshärtbare Komponente und wenigstens eine tetrafunktionale strahlungshärtbare Komponente im Gewichtsverhältnis 5 : 1 oder wenigstens eine monofunktionale strahlungshärtbare Komponente und wenigstens eine difunktionale strahlungshärtbare Komponente und wenigstens eine trifunktionale strahlungshärtbare Komponente im Gewichtsverhältnis 1 : 5 : 1 umfasst.

5. Verfahren nach einem der vorstehenden Ansprüche, wobei das Dünnstglas der Komponente A bzw. der Komponente C jeweils eine mittlere Dicke aus einem Bereich von 13 µm bis 510 µm aufweist.

6. Verfahren nach einem der vorstehenden Ansprüche, wobei das Dünnstglas der Komponente A auf der Vorderfläche V_{DA} wenigstens eine Funktionsschicht F_{VA} und das Dünnstglas der Komponente C auf der Rückfläche R_{DC} wenigstens eine Funktionsschicht F_{RC} umfasst.

7. Verfahren nach Anspruch 6, wobei die wenigstens eine Funktionsschicht F_{VA} und die wenigstens eine Funktionsschicht F_{RC} jeweils aus der Gruppe bestehend aus wenigstens einer Entspiegelungsschicht, wenigstens einer elektrisch leitfähigen oder halbleitenden Schicht, wenigstens einer Antibeschlagsschicht und wenigstens einer Clean-Coat-Schicht ausgewählt ist.

8. Verfahren nach einem der vorstehenden Ansprüche, wobei die Vorderfläche des Dünnstglases V_{DA} der Komponente A ausgehend von der Vorderfläche V_{DA} in Richtung des Objekts bzw. die Rückfläche R_{DC} der Komponente C ausgehend von der Rückfläche R_{DC} in Richtung Auge jeweils mit folgenden Funktionsschichten F_{VA} bzw. F_{RC} belegt ist:
a) optional wenigstens eine elektrisch leitfähige oder halbleitende Schicht,
b) wenigstens eine Entspiegelungsschicht,
c) wenigstens eine Antibeschlagsschicht oder wenigstens eine Clean-Coat-Schicht

9. Verfahren nach einem der vorstehenden Ansprüche, wobei Oberflächentopographie des Dünnstglases der Komponente A und der Komponente C jeweils aus der Gruppe bestehend aus sphärisch, asphärisch, torisch, atorisch, progressiv und plan ausgewählt ist.

10. Verfahren nach einem der vorstehenden Ansprüche, wobei die Oberflächentopographie der Vorderfläche V_{DA} gleich der Oberflächentopographie der Rückfläche R_{DA} des Dünnstglases der Komponente A ist und die Oberflächentopographie der Vorderfläche V_{DC} gleich der Oberflächentopographie der Rückfläche R_{DC} des Dünnstglases der Komponente C ist.

11. Verfahren nach einem der vorstehenden Ansprüche, wobei das Dünnstglas der Komponente A und das Dünnstglas der Komponente C jeweils kein Farbmittel umfasst.

12. Verfahren nach einem der vorstehenden Ansprüche, wobei das Brillenglas eine optische Korrektionswirkung und/oder eine Bildfehlerkorrektion für das blickende Auge aufweist.

13. Verfahren nach Anspruch 12, wobei die Oberflächentopographien Vorderfläche V_{DA} des Dünnstglases der Komponente A und der Rückfläche R_{DC} des Dünnstglases der Komponente C, deren jeweilige mittlere Dicke und deren jeweiliger Brechungsindex, optional deren Abbezahl bei der Berechnung der ortsabhängigen Brechungsindexverteilung berücksichtigt wird.

## Claims

1. Process for producing a spectacle lens comprising, proceeding from the front face on the object side of the spectacle lens to the opposite reverse face of the spectacle lens, at least components A, B and C, wherein component A comprises at least an ultrathin lens, component B comprises at least a polymeric material, component C comprises at least an ultrathin lens and the process comprises the following steps:
a) providing and optionally fixing the ultrathin lens of component A or C, wherein the ultrathin lens of component A and the ultrathin lens of component C each comprise a glass composition selected from the group consisting of borosilicate glass, aluminoborosilicate glass and alkali-free borosilicate glass, the glass composition of the ultrathin lens of component A and of the ultrathin lens of component C is the same or different, the ultrathin lens of component A and the ultrathin lens of component C each have an average thickness from a range from 13 µm to 760 pm, and wherein the average thickness of the ultrathin lens of component A and of the ultrathin lens of component C is the same or different,
b) providing a three-dimensional model of component B,
c) digitally cutting the three-dimensional model from step b) into individual two-dimensional slices,
d) providing at least one 3D printing ink, where the printing ink comprises at least one radiation-curable component,
e) constructing component B from the sum total of the individual two-dimensional slices from step c) by means of a printing operation on one of the ultrathin lenses of component A or C,
f) curing component B by means of UV light, wherein the curing can be effected fully or partially after each application of individual volume elements or after application of a slice of volume elements, and the partial curing can be completed on completion of the printing process, wherein the polymeric material of component B has a location-dependent refractive index distribution,
g) optionally machining and/or grinding and/or turning and/or polishing the surface of component B obtained in step f) that does not adjoin one of the ultrathin lenses of component A or C,
h) h1) if the ultrathin lens of component A has been provided in step a): bonding the reverse face R_{B} of component B of the spectacle lens obtained in step f) comprising components A and B to the front face V_{DC} of the ultrathin lens of component C; h2) if the ultrathin lens of component C has been provided in step a): bonding the front face V_{B} of component B of the spectacle lens obtained in step f) comprising components B and C to the reverse face R_{DA} of the ultrathin lens of component A,
i) edging the spectacle lens obtained in step h) comprising components A, B and C.

2. Process according to Claim 1, in which components A and B or B and C to be bonded in each case are each bonded by means of an adhesive or by means of a bonding method.

3. Process according to either of the preceding claims, wherein the radii of curvature of the components to be bonded by means of an adhesive differ from one another by less than 1 mm.

4. Process according to any of the preceding claims, wherein the printing ink, preferably 3D printing ink, comprises at least one radiation-curable component and optionally at least one colorant, and the radiation-curable component comprises at least one monomer from the group consisting of (meth)acrylate monomers, epoxy monomers, vinyl monomers and allyl monomers and
i) the total proportion of at least one kind of monofunctional (meth)acrylate monomer, epoxy monomer, vinyl monomer or allyl monomer or of a mixture of different monofunctional (meth)acrylate monomers, epoxy monomers, vinyl monomers or allyl monomers is in each case within a range from 0.0% by weight to 35% by weight, based in each case on the total weight of the printing ink, and/or ii) the total proportion of at least one kind of difunctional (meth)acrylate monomer, epoxy monomer, vinyl monomer or allyl monomer or of a mixture of different difunctional (meth)acrylate monomers, epoxy monomers, vinyl monomers or allyl monomers is in each case within a range from 32.0% by weight to 99% by weight, based in each case on the total weight of the printing ink, and/or iii) the total proportion of at least one kind of trifunctional (meth)acrylate monomer, epoxy monomer, vinyl monomer or allyl monomer or of a mixture of different trifunctional (meth)acrylate monomers, epoxy monomers, vinyl monomers or allyl monomers is in each case within a range from 1.0% by weight to 51.0% by weight, based in each case on the total weight of the printing ink, and/or iv) the total proportion of at least one kind of tetrafunctional (meth)acrylate monomer, epoxy monomer, vinyl monomer or allyl monomer or of a mixture of different tetrafunctional (meth)acrylate monomers, epoxy monomers, vinyl monomers or allyl monomers is in each case within a range from 0% by weight to 16% by weight, based in each case on the total weight of the printing ink,
or
the printing ink comprises at least one monofunctional radiation-curable component and at least one difunctional radiation-curable component in a weight ratio of 1:1 or at least one monofunctional radiation-curable component and at least one trifunctional radiation-curable component in a weight ratio of 1:5 or at least one difunctional radiation-curable component and at least one trifunctional radiation-curable component in a weight ratio of 1:1 or at least one difunctional radiation-curable component and at least one tetrafunctional radiation-curable component in a weight ratio of 5:1 or at least one monofunctional radiation-curable component and at least one difunctional radiation-curable component and at least one trifunctional radiation-curable component in a weight ratio of 1:5:1.

5. Process according to any of the preceding claims, wherein the ultrathin lens of component A or of component C in each case has an average thickness from a range from 13 µm to 510 µm.

6. Process according to any of the preceding claims, wherein the ultrathin lens of component A comprises at least one functional layer F_{VA} on the front face V_{DA} and the ultrathin lens of component C comprises at least one functional layer F_{RC} on the reverse face R_{DC}.

7. Process according to Claim 6, wherein the at least one functional layer F_{VA} and the at least one functional layer F_{RC} is in each case selected from the group consisting of at least one antireflection layer, at least one electrically conductive or semiconductive layer, at least one antifog layer and at least one clean-coat layer.

8. Process according to any of the preceding claims, wherein the front face of the ultrathin lens V_{DA} of component A proceeding from the front face V_{DA} in the object direction, or the reverse face R_{DC} of component C proceeding from the reverse face R_{DC} in the eye direction, is covered in each case by the following functional layers F_{VA} or F_{RC}:
a) optionally at least one electrically conductive or semiconductive layer,
b) at least one antireflection layer,
c) at least one antifog layer or at least one clean-coat layer.

9. Process according to any of the preceding claims, wherein the surface topography of the ultrathin lens of component A and component C is in each case selected from the group consisting of spherical, aspherical, toric, atoric, progressive and planar.

10. Process according to any of the preceding claims, wherein the surface topography of the front face V_{DA} is the same as the surface topography of the reverse face R_{DA} of the ultrathin lens of component A and the surface topography of the front face V_{DC} is the same as the surface topography of the reverse face R_{DC} of the ultrathin lens of component C.

11. Process according to any of the preceding claims, wherein the ultrathin lens of component A and the ultrathin lens of component C in each case does not comprise any colorant.

12. Process according to any of the preceding claims, wherein the spectacle lens has an optical correction effect and/or aberration correction for the viewing eye.

13. Process according to Claim 12, wherein the surface topographies of front face V_{DA} of the ultrathin lens of component A and of the reverse face R_{DC} of the ultrathin lens of component C, their respective average thickness and their respective refractive index, and optionally their Abbe number are taken into account in the calculation of the location-dependent refractive index distribution.

## Revendications

1. Procédé de fabrication d'un verre de lunettes comprenant, à partir de la surface avant du côté de l'objet du verre de lunettes vers la surface arrière opposée du verre de lunettes, au moins les composants A, B et C, le composant A comprenant au moins un verre ultra-mince, le composant B comprenant au moins un matériau polymère, le composant C comprenant au moins un verre ultra-mince, et le procédé comprenant les étapes suivantes :
a) la préparation et éventuellement la fixation du verre ultra-mince du composant A ou C, le verre ultra-mince du composant A et le verre ultra-mince du composant C comprenant chacun une composition de verre choisie dans le groupe constitué par le verre de borosilicate, le verre de borosilicate d'aluminium et le verre de borosilicate sans alcali, la composition de verre du verre ultra-mince du composant A et du verre ultra-mince du composant C étant identiques ou différentes l'une de l'autre, le verre ultra-mince du composant A et le verre ultra-mince du composant C présentant chacun une épaisseur moyenne dans une plage allant de 13 µm à 760 µm, et l'épaisseur moyenne du verre ultra-mince du composant A et du verre ultra-mince du composant C étant identiques ou différentes l'une de l'autre,
b) la préparation d'un modèle tridimensionnel du composant B,
c) la découpe numérique du modèle tridimensionnel de l'étape b) en couches bidimensionnelles individuelles,
d) la préparation d'au moins une encre d'impression 3D, l'encre d'impression comprenant au moins un composant durcissable par rayonnement,
e) la formation du composant B à partir de la somme des couches bidimensionnelles individuelles de l'étape c) par un processus d'impression sur un des verres ultra-minces du composant A ou C,
f) le durcissement du composant B au moyen de lumière UV, le durcissement pouvant avoir lieu à chaque fois en totalité ou en partie après l'application d'éléments volumiques individuels ou après l'application d'une couche d'éléments volumiques, et le durcissement partiel pouvant être complété après la fin du processus d'impression, le matériau polymère du composant B présentant une distribution de l'indice de réfraction dépendante de l'emplacement,
g) éventuellement le fraisage et/ou le ponçage et/ou le tournage et/ou le polissage de la surface du composant B obtenue à l'étape f) qui n'est pas adjacente à un des verres ultra-minces du composant A ou C,
h) h1) lorsqu'à l'étape a), le verre ultra-mince du composant A a été préparé : la liaison de la surface arrière R_{B} du composant B du verre de lunettes obtenu à l'étape f) comprenant les composants A et B, avec la surface avant V_{DC} du verre ultra-mince du composant C ; h2) lorsqu'à l'étape a), le verre ultra-mince du composant C a été préparé : la liaison de la surface avant V_{B} du composant B du verre de lunettes obtenu à l'étape f) comprenant les composants B et C, avec la surface arrière R_{DA} du verre ultra-mince du composant A,
i) la mise en forme du bord du verre de lunettes obtenu à l'étape h) comprenant les composants A, B et C.

2. Procédé selon la revendication 1, selon lequel la liaison des composants A et B ou B et C à relier respectivement a lieu à chaque fois au moyen d'un adhésif ou au moyen d'un procédé de liaison.

3. Procédé selon l'une quelconque des revendications précédentes, dans lequel les rayons de courbure des composants à relier au moyen d'un adhésif diffèrent l'un de l'autre de moins de 1 mm.

4. Procédé selon l'une quelconque des revendications précédentes, dans lequel l'encre d'impression, de préférence l'encre d'impression 3D, comprend au moins un composant durcissable par rayonnement et éventuellement au moins un colorant, et le composant durcissable par rayonnement comprend au moins un monomère du groupe constitué par les monomères de (méth)acrylate, les monomères époxy, les monomères de vinyle et les monomères d'allyle, et
i) la proportion totale d'au moins un type de monomère de (méth)acrylate monofonctionnel, de monomère époxy, de monomère de vinyle ou d'allyle monofonctionnel ou d'un mélange de monomères de (méth)acrylate, de monomères époxy, de monomères de vinyle ou d'allyle monofonctionnels différents les uns des autres se situe à chaque fois dans une plage allant de 0,0 % en poids à 35 % en poids, à chaque fois par rapport au poids total de l'encre d'impression et/ou
ii) la proportion totale d'au moins un type de monomère de (méth)acrylate, de monomère époxy, de monomère de vinyle ou d'allyle difonctionnel ou d'un mélange de monomères de (méth)acrylate, de monomères époxy, de monomères de vinyle ou d'allyle difonctionnels différents les uns des autres se situe à chaque fois dans une plage allant de 32,0 % en poids à 99 % en poids, à chaque fois par rapport au poids total de l'encre d'impression, et/ou iii) la proportion totale d'au moins un type de monomère de (méth)acrylate, de monomère époxy, de monomère de vinyle ou d'allyle trifonctionnel ou d'un mélange de monomères de (méth)acrylate, de monomères époxy, de monomères de vinyle ou d'allyle trifonctionnels différents les uns des autres se situe à chaque fois dans une plage allant de 1,0 % en poids à 51,0 % en poids, à chaque fois par rapport au poids total de l'encre d'impression, et/ou iv) la proportion totale d'au moins un type de monomère de (méth)acrylate, de monomère époxy, de monomère de vinyle ou d'allyle tétrafonctionnel ou d'un mélange de monomères de (méth)acrylate, de monomères époxy, de monomères de vinyle ou d'allyle tétrafonctionnels différents les uns des autres se situe à chaque fois dans une plage allant de 0 % en poids à 16,0 % en poids, à chaque fois par rapport au poids total de l'encre d'impression,
ou
l'encre d'impression comprend au moins un composant durcissable par rayonnement monofonctionnel et au moins un composant durcissable par rayonnement difonctionnel en un rapport en poids de 1:1 ou au moins au moins un composant durcissable par rayonnement monofonctionnel et au moins un composant durcissable par rayonnement trifonctionnel en un rapport en poids de 1:5 ou au moins un composant durcissable par rayonnement difonctionnel et au moins un composant durcissable par rayonnement trifonctionnel en un rapport en poids de 1:1 ou au moins un composant durcissable par rayonnement difonctionnel et au moins un composant durcissable par rayonnement tétrafonctionnel en un rapport en poids de 5:1 ou au moins un composant durcissable par rayonnement monofonctionnel et au moins un composant durcissable par rayonnement difonctionnel et au moins un composant durcissable par rayonnement trifonctionnel en un rapport en poids de 1:5:1.

5. Procédé selon l'une quelconque des revendications précédentes, dans lequel le verre ultra-mince du composant A ou du composant C présente à chaque fois une épaisseur moyenne dans une plage allant de 13 µm à 510 µm.

6. Procédé selon l'une quelconque des revendications précédentes, dans lequel le verre ultra-mince du composant A comprend sur la surface avant V_{DA} au moins une couche fonctionnelle F_{VA} et le verre ultra-mince du composant C comprend sur la surface arrière R_{DC} au moins une couche fonctionnelle F_{RC}.

7. Procédé selon la revendication 6, dans lequel ladite au moins une couche fonctionnelle F_{VA} et ladite au moins une couche fonctionnelle F_{RC} sont chacune choisies dans le groupe constitué par au moins une couche antireflet, au moins une couche électriquement conductrice ou semi-conductrice, au moins une couche antibuée et au moins une couche Clean Coat.

8. Procédé selon l'une quelconque des revendications précédentes, dans lequel la surface avant du verre ultra-mince V_{DA} du composant A est revêtue, à partir de la surface avant V_{DA} dans la direction de l'objet, ou la surface arrière R_{DC} du composant C est revêtue, à partir de la surface arrière R_{DC} dans la direction de l'œil, à chaque fois avec les couches fonctionnelles F_{VA} ou F_{RC} suivantes :
a) éventuellement au moins une couche électriquement conductrice ou semi-conductrice,
b) au moins une couche antireflet,
c) au moins une couche antibuée ou au moins une couche Clean Coat.

9. Procédé selon l'une quelconque des revendications précédentes, dans lequel la topographie de surface du verre ultra-mince du composant A et du composant C est choisie à chaque fois dans le groupe constitué par sphérique, asphérique, torique, atorique, progressive et plane.

10. Procédé selon l'une quelconque des revendications précédentes, dans lequel la topographie de surface de la surface avant V_{DA} est identique à la topographie de surface de la surface arrière R_{DA} du verre ultra-mince du composant A, et la topographie de surface de la surface avant V_{DC} est identique à la topographie de surface de la surface arrière R_{DC} du verre ultra-mince du composant C.

11. Procédé selon l'une quelconque des revendications précédentes, dans lequel le verre ultra-mince du composant A et le verre ultra-mince du composant C ne comprennent chacun aucun colorant.

12. Procédé selon l'une quelconque des revendications précédentes, dans lequel le verre de lunettes présente un effet de correction optique et/ou une correction de défauts de l'image pour l'œil regardant.

13. Procédé selon la revendication 12, dans lequel les topographies de surface de la surface avant V_{DA} du verre ultra-mince du composant A et de la surface arrière R_{DC} du verre ultra-mince du composant C, leur épaisseur moyenne respective et leur indice de réfraction respectif, éventuellement leur nombre d'Abbe, sont pris en compte lors du calcul de la distribution de l'indice de réfraction dépendante de l'emplacement.
